# FASCICULE DE BREVET EUROPEEN

(11) **EP 2 481 200 B1**
(45) Date de publication et mention de la délivrance du brevet: **01.04.2020**
(21) Numéro de dépôt: 10770598.0
(22) Date de dépôt: 21.09.2010
(51) Int. Cl.: H04L 29/06, H04L 12/58, H04L 12/18

(54) **CONTROLE D'UNE SESSION D'ECHANGE DE DONNEES ENTRE DES TERMINAUX D'UN PREMIER UTILISATEUR AVEC AU MOINS UN TERMINAL D'UN DEUXIEME UTILISATEUR**
ÜBERWACHUNG EINER DATENAUSTAUSCHSITZUNG ZWISCHEN ENDGERÄTEN EINES ERSTEN BENUTZERS UND MINDESTENS EINEM ENDGERÄT EINES ZWEITEN BENUTZERS
MONITORING OF A DATA-EXCHANGE SESSION BETWEEN TERMINALS BELONGING TO A FIRST USER AND AT LEAST ONE TERMINAL BELONGING TO A SECOND USER

(30) Priorité: 22.09.2009 FR 0956521
(43) Date de publication de la demande: 01.08.2012
(73) Titulaire: Orange, 75015 Paris (FR)
(72) Inventeur: HENRY, Katell, F-29200 Brest (FR); GESTRAUD, Yann, F-35700 Rennes (FR)
(74) Mandataire: Plasseraud IP
(86) Numéro de dépôt international: PCT/FR2010/051959
(87) Numéro de publication internationale: WO 2011/036390

(56) Documents cités:
- US-A1- 2008 229 390
- US-A1- 2008 281 971
- US-A1- 2009 150 562

## Description

L'invention concerne un procédé, un dispositif et un programme de contrôle d'une session d'échange de données entre des terminaux d'un premier utilisateur avec au moins un terminal d'un deuxième utilisateur, un procédé, un dispositif et un programme de participation, un serveur et un terminal. En particulier, l'invention concerne les procédés et dispositifs mis en œuvre dans une session d'échange de données entre des groupes de terminaux. La session est notamment, une session dite multilegs anglicisme pour "multi-branches" signifiant qu'elle est effectivement composée de trois sessions en série: deux sessions de groupe avec les terminaux respectivement des premier et deuxième utilisateurs, et une session entre les premier et deuxième utilisateurs.

Dans le cadre d'architectures de service élaborés sur des architectures IMS (IP Multimédia Subsystem en anglais pour système de communication IP multimédia) ou sur un cœur SIP (Session Initiation Protocol en anglais pour protocole s'initialisation de sessions), lorsqu'un utilisateur souhaite recevoir un message multimédia sur plusieurs terminaux, le serveur de messagerie transfère l'invitation à établir une session à chacun des terminaux. Mais la session de communication ne sera établie qu'avec un seul des terminaux: le premier à répondre positivement à l'invitation (par un message du type 200 OK). Par conséquent, l'utilisateur ne peut utiliser qu'un seul de ces terminaux pendant la session.

Dans le cadre du Push to Talk (conférence mobile IP) décrit notamment par US 20070129051, une session est établie avec un groupe d'utilisateurs en générant une invitation d'établissement de session comportant l'identifiant du groupe. La méthode décrite ne prévoit pas le fait de pouvoir contacter un utilisateur donné sur plusieurs de ses terminaux.

Le document US 2008/0281971 décrit des communications multimédia utilisant plusieurs dispositifs d'un réseau. La communication est divisée en plusieurs parties pour envoyer simultanément chaque partie à des dispositifs distincts d'un groupe, par exemple la partie audio à un dispositif sélectionné et la partie vidéo à un autre dispositif sélectionné. Les communications enseignées ne prévoient pas que l'utilisateur puisse recevoir la totalité de la communication sur plusieurs terminaux simultanément.

Le document US2009/0150562 enseigne un système de communication dans lequel on peut utiliser une identité unique pour identifier plusieurs dispositifs d'un groupe de dispositifs afin qu'un utilisateur puisse configurer des règles, y compris au cours d'une session de communication, pour que la session de communication soit établie avec un dispositif du groupe de dispositifs en particulier.

Un des buts de la présente invention est de remédier à des inconvénients de l'état de la technique.

Un objet de l'invention est un procédé de contrôle d'une session d'échange de données entre des premiers terminaux d'un premier utilisateur avec au moins un deuxième terminal d'un deuxième utilisateur, ledit procédé de contrôle comporte, après réception d'une invitation d'établissement d'une session audit premier utilisateur, la création d'un premier groupe de premiers terminaux du premier utilisateur apte à permettre l'établissement de ladite session avec ledit premier groupe.

Ainsi, une session est établie avec un groupe de terminaux du premier utilisateur.

Le groupe est défini pour la session. Ainsi, le groupe non préétabli permet, notamment, au premier utilisateur de changer de terminaux, de générer un groupe de terminaux du premier utilisateur approprié à la session en cours d'établissement, etc.

Notamment, selon les préférences du fournisseur de service, le groupe pourra être construit a la volée selon les souhaits de l'utilisateur ou au contraire préétabli par défaut vers tous les terminaux de l'utilisateur, par exemple au niveau d'une gestion de ses préférences.

Avantageusement, ledit premier groupe est fonction d'une première liste de premiers terminaux obtenue de ladite invitation d'établissement de session dans laquelle ladite première liste a été substituée à une première adresse du premier utilisateur.

Ainsi, le procédé de contrôle n'a pas nécessité de rechercher les éléments nécessaires à cette création dans divers serveurs ou autres base de données car il récupère les éléments dans l'invitation reçue pour créer le groupe.

Avantageusement, ledit procédé de contrôle comporte la fourniture des données reçues pour le premier utilisateur durant la session aux premiers terminaux appartenant audit premier groupe.

Ainsi, dans le réseau, la session est une session de groupe, à savoir que les données émises par le deuxième utilisateur ne transitent qu'une fois pour tout les premiers terminaux dans le réseau, entre la première plateforme de messagerie associée au premier utilisateur et la deuxième plateforme de messagerie associée au deuxième utilisateur, évitant les problèmes de surcharge et de saturation du réseau, c'est seulement à partir du point de contrôle que les données émises par le deuxième utilisateur sont distribuées à chaque premier terminal dudit premier groupe.

Avantageusement, ledit procédé de contrôle comporte la fourniture des données émises par le premier utilisateur durant la session aux premiers terminaux appartenant audit premier groupe.

Ainsi, le point de contrôle distribue aussi les données émises par le premier utilisateur à partir de l'un de ses premiers terminaux à chaque premier terminal dudit premier groupe associé à ladite session. La fonction de distribution est centralisée pour toutes les données sur le point de contrôle. Le premier utilisateur, s'il veut changer de premier terminal au cours d'une session, ne doit pas transférer ses données avant ce changement. Les données sont déjà disponibles.

Avantageusement, ledit procédé comporte l'affichage des données émises par le premier utilisateur durant la session sur les premiers terminaux appartenant audit premier groupe.

Ainsi, non seulement les données sont disponibles mais il n'a pas besoin de les rechercher sur son terminal puisqu'elles sont déjà affichées.

Avantageusement, ledit procédé de contrôle comporte une gestion d'un historique des échanges indépendante des premiers terminaux utilisés par ledit premier utilisateur pour l'émission des données.

Ainsi, si un utilisateur veut relire des échanges de différentes sessions pour lesquels il n'a pas systématiquement utilisé le même premier terminal, il n'aura pas à rassembler par lui-même ses historiques sur chaque premier terminal utilisé. En outre, cela permet une gestion de l'historique d'une session au cours de laquelle, le premier utilisateur aura utilisé plusieurs premiers terminaux pour émettre des données y compris lorsque le premier utilisateur aura, en cours de conversation, rajouter ou enlever n'importe lequel de ses premiers terminaux.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif de contrôle faisant notamment parti d'un serveur et étant conçus pour commander l'exécution des différentes étapes de ce procédé.

L'invention vise donc aussi un programme comprenant des instructions de code de programme pour l'exécution des étapes du procédé de contrôle lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

Un autre objet de l'invention est un dispositif de contrôle d'une session d'échange de données entre des premiers terminaux d'un premier utilisateur avec au moins un deuxième terminal d'un deuxième utilisateur, ledit dispositif de contrôle comporte des moyens d'établissement d'une session avec ledit premier utilisateur apte à permettre l'établissement de ladite session avec un premier groupe de premiers terminaux du premier utilisateur, ledit premier groupe ayant été créé après réception d'une invitation d'établissement d'une session audit premier utilisateur.

L'invention a pour objet un procédé de participation d'un premier utilisateur à une session d'échange de données entre des premiers terminaux d'un premier utilisateur avec au moins un deuxième terminal d'un deuxième utilisateur, ledit procédé de participation comportant la modification d'une invitation d'établissement d'une session audit premier utilisateur apte à permettre l'établissement de ladite session avec un premier groupe de premiers terminaux dudit premier utilisateur, ledit premier groupe ayant été créé à partir de ladite invitation modifiée.

Avantageusement, ladite modification comporte une substitution d'une adresse du premier utilisateur par une liste de premiers terminaux dans ladite invitation d'établissement de session au premier utilisateur.

Ainsi, l'invitation d'établissement d'une session est destinée non à un premier terminal en particulier mais au premier utilisateur obligeant la création d'un premier groupe de terminaux en recherchant dans un premier temps une liste de premiers terminaux à partir de laquelle ledit premier groupe sera créé.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif de participation faisant notamment parti d'un serveur et étant conçus pour commander l'exécution des différentes étapes de ce procédé.

L'invention vise donc aussi un programme comprenant des instructions de code de programme pour l'exécution des étapes du procédé de participation lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

L'invention a également pour objet un dispositif de participation d'un premier utilisateur à une session d'échange de données entre des premiers terminaux d'un premier utilisateur avec au moins un deuxième terminal d'un deuxième utilisateur, caractérisé en ce que ledit dispositif de participation comporte des moyens de modification d'une invitation d'établissement d'une session audit premier utilisateur apte à permettre l'établissement de ladite session avec un premier groupe de premiers terminaux dudit premier utilisateur, ledit premier groupe ayant été créé à partir de ladite invitation modifiée.

L'invention a aussi pour objet un dispositif de stockage de préférences d'un premier utilisateur comportant au moins des identifiants de premiers terminaux dudit premier utilisateur et au moins une règle de préférence dudit premier utilisateur associés à une adresse dudit premier utilisateur apte à permettre l'établissement de ladite session avec un premier groupe de premiers terminaux dudit premier utilisateur, ledit premier groupe ayant été créé à partir d'identifiants desdits premiers terminaux en fonction d'une première règle de préférence.

Un objet de l'invention est un serveur comportant au moins des moyens de contrôle d'une session d'échange de données entre des terminaux d'un premier utilisateur avec au moins un terminal d'un deuxième utilisateur, lesdits moyens de contrôle créant, après réception d'une invitation d'établissement d'une session audit premier utilisateur, un premier groupe de premiers terminaux du premier utilisateur apte à permettre l'établissement de ladite session avec ledit premier groupe.

Un autre objet de l'invention est un terminal d'un premier utilisateur ou d'un deuxième utilisateur comportant des moyens de connexion apte à émettre une invitation d'établissement d'une session d'échange de données entre un premier utilisateur et un deuxième utilisateur apte à permettre l'établissement de ladite session entre un premier groupe de premiers terminaux du premier utilisateur et au moins un deuxième terminal du deuxième utilisateur, ledit premier groupe ayant été créé suite à l'émission de ladite invitation.

Les caractéristiques et avantages de l'invention apparaîtront plus clairement à la lecture de la description, faite à titre d'exemple, et des figures s'y rapportant qui représentent :
- Figure 1, un schéma synoptique du procédé de contrôle selon l'invention,
- Figures 2A et 2B, des schémas des échanges entre divers dispositifs, notamment des dispositifs de contrôle (associés à des dispositifs de participation illustrés figure 2A ou mettant en œuvre le procédé de participation illustrés figure 2B), et des terminaux selon l'invention,
- Figure 3, un schéma simplifié d'un système de communication mettant en œuvre les dispositifs selon l'invention,
- Figure 4A, l'initiation d'une session par un premier utilisateur U1 utilisant plusieurs terminaux vers un utilisateur U2 utilisant un seul terminal mettant en œuvre des dispositifs de contrôle, des serveurs et des terminaux selon l'invention,
- Figure 4B, l'initiation d'une session par un utilisateur U2 utilisant un seul terminal vers un premier utilisateur U1 utilisant plusieurs terminaux mettant en œuvre des dispositifs de contrôle, des serveurs et des terminaux selon l'invention,
- Figure 4C, l'initiation d'une session par un premier utilisateur U1 utilisant plusieurs terminaux vers un utilisateur U2 utilisant aussi plusieurs terminaux mettant en œuvre des dispositifs de contrôle et des dispositifs de participation, des serveurs et des terminaux selon l'invention.

La session d'échanges de données peut être de tout type, notamment une session pour le transfert de ficher, mais aussi une session pour l'établissement d'une conversation entre deux utilisateurs : un premier utilisateur U1 et un deuxième utilisateur U2 (conversation écrite et/ou orale et/ou Visio, et/ou multimédia, etc.). En particulier, la description illustrera l'invention dans le cadre de conversation sur réseau IP, notamment dans le cadre de messagerie convergente sur réseau IP, par exemple selon le standard CPM (Converged IP Messaging en anglais). Par convergente est entendu la convergence des différents types de messagerie pour différents type de terminaux tels que notamment les téléphones mobiles, les PC, PDA et autres objets communicants sur réseau IP donnant accès à un utilisateur à une messagerie.

L'invention utilise notamment un protocole de type SIP comme le montre les figures suivantes. Mais de manière plus générale, l'invention peut être implémentée en utilisant d'autres protocoles d'initialisation de session, notamment le protocole XMPP d'échange décentralisé de messages instantanés ou non, entre clients, au format XML, utilisé en particulier par le dispositif de messagerie gtalk.

Les différents modes de réalisation décrit ci-après sont mis en œuvre séparément ou en combinaison avec un ou plusieurs d'entre eux.

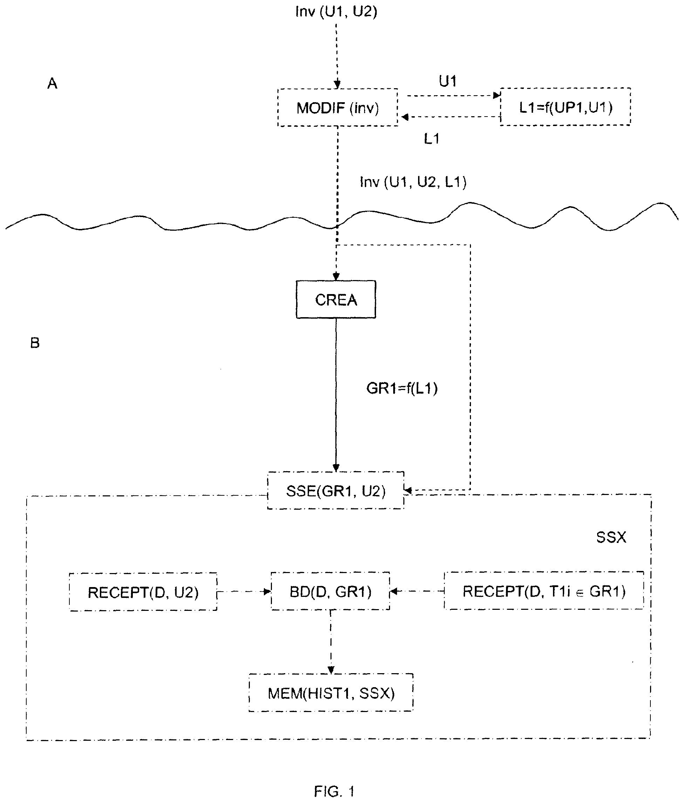

La figure 1 illustre les procédés mis en œuvre par l'invention lors de l'établissement d'une session SSX d'échanges de données puis lors de la session SSX par elle-même.

Dans un mode de réalisation particulier, l'invitation inv(U1, U2) d'un premier utilisateur U1 à un deuxième utilisateur U2 ou inversement est modifiée MODIF(inv) soit lors d'un procédé de contrôle de la session, soit lors d'un procédé de participation mis en oeuvre préalablement au procédé de contrôle.

Cette modification est effectuée notamment en se basant sur une première liste L1 de premiers terminaux déterminés en fonction des préférences UP1 du premier utilisateur U1. Par exemple, l'adresse du premier utilisateur U1 est substituée par la première liste L1.

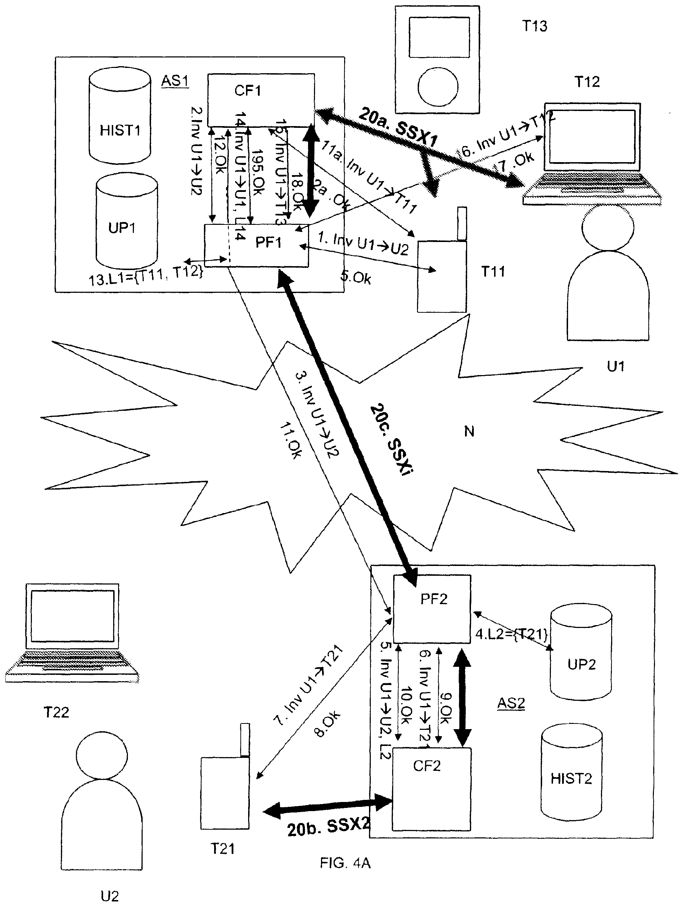

Dans un mode de réalisation particulier, cette substitution est faite par un premier serveur AS1 associé au premier utilisateur U1 (illustré notamment sur les figures 4A à 4C) qui soit connaît la première liste L1 des premiers terminaux du premier utilisateur U1 notamment de manière préconfigurée, par exemple dans un premier module de préférence utilisateur UP1, soit la récupère dynamiquement auprès d'un autre serveur de messagerie ou de tout autre dispositif cœur support à la session de communication auquel les premiers terminaux du premier utilisateur U1 ont signifié leurs états de connexion et disponibilité à communiquer.

L'invitation modifiée inv(U1, U2, L1) est ensuite traitée par un procédé de contrôle de session. Le procédé de contrôle comporte la création d'un premier groupe GR1 de premiers terminaux apte à permettre l'établissement de la session avec le premier groupe GR1.

Dans un mode de réalisation particulier, le premier groupe GR1 est fonction de la première liste L1. La dite premier liste est obtenue de l'invitation modifiée.

L'établissement de la session SSE est donc un établissement de session de groupe au moins coté du premier utilisateur U1 en utilisant ce premier groupe GR1: SSE(GR1, U2).

Le procédé de contrôle comporte, lors d'une session SSX, la fourniture BD des données reçues D pour le premier utilisateur U1 au premier groupe GR1, c'est-à-dire chacun des premiers terminaux de ce premier groupe GR1, sur réception RECEPT(D, U1) de données D provenant du deuxième utilisateur U2. La fourniture est notamment temps réel ou avec un délai prédéterminé adapté au service de messagerie.

Dans un mode de réalisation particulier, le procédé de contrôle comporte, lors d'une session SSX, la fourniture et, éventuellement, l'affichage BD des données D émises par le premier utilisateur U1 au premier groupe GR1, c'est-à-dire chacun des premiers terminaux de ce premier groupe, sur réception RECEPT(D, T1i e GR1) de données D émis par un premier terminal T1i du premier utilisateur U1 appartenant au premier groupe GR1.

Ainsi, dans un mode de réalisation particulier, le procédé de contrôle comporte à la fois le contrôle de l'établissement de la session et le contrôle de la session établie.

Dans un mode de réalisation particulier, le procédé de contrôle comporte une gestion d'un historique des échanges HIST1 de façon indépendante des premiers terminaux.

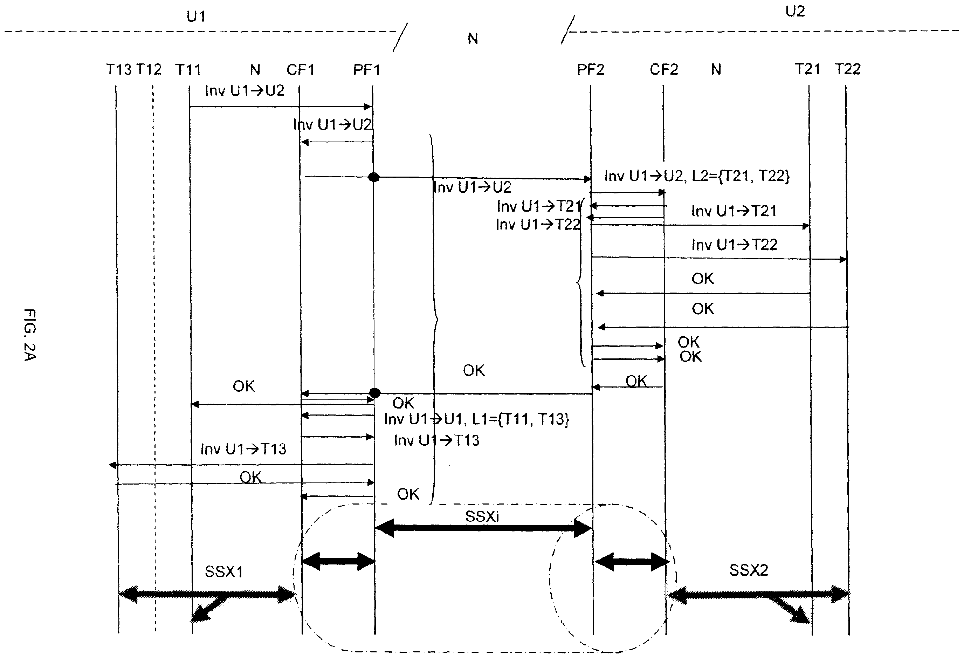

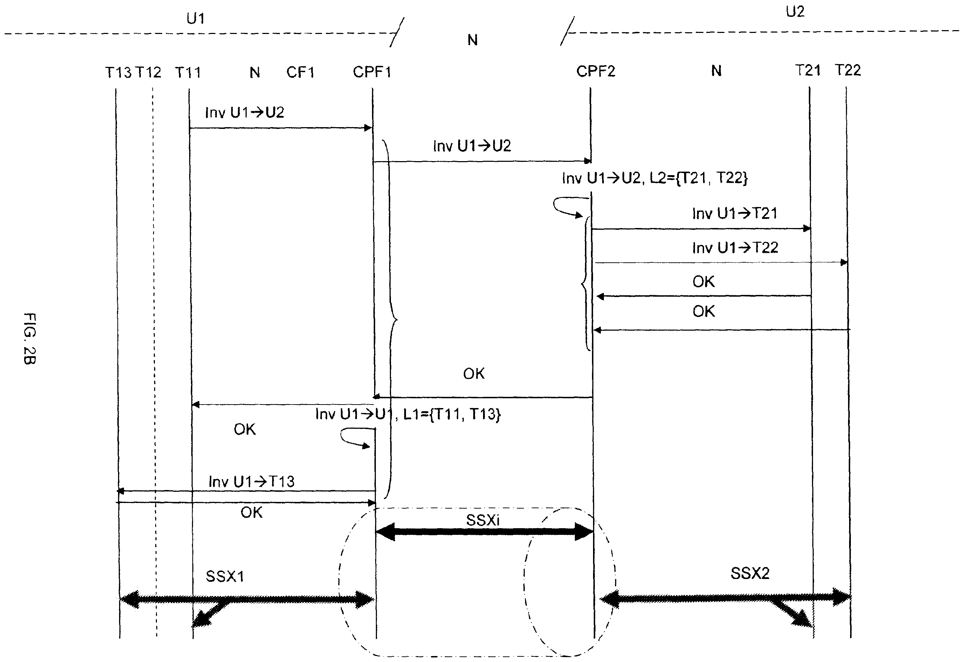

Dans un mode de réalisation particulier, non illustré par la figure 1, le procédé de contrôle mis en œuvre du coté du premier utilisateur établit, lors de l'établissement de la session SSX entre les premiers terminaux et les deuxièmes terminaux, deux sessions:
- une première session SSX1 entre un premier dispositif de contrôle CF1 associé au premier utilisateur et illustré par les figures 2 et 4A à 4C et les premiers terminaux du premier groupe GR1, et
- une session intermédiaire SSXi entre un premier dispositif de contrôle CF1 associé au premier utilisateur et un deuxième dispositif de contrôle CF2 associé au deuxième utilisateur et illustré par les figures 2 et 4A à 4C.

Lors de l'établissement de cette session SSX entre les premiers terminaux et les deuxièmes terminaux, un procédé de contrôle équivalent du coté du deuxième utilisateur:
- contribue à l'établissement la session intermédiaire SSXi, et
- établit une deuxième session SSX2 entre un deuxième dispositif de contrôle CF2 associé au deuxième utilisateur et au moins un deuxième terminal, le cas échant, d'un deuxième groupe GR2.

La session est établie avec au moins un deuxième terminal d'un deuxième utilisateur. Par au moins un deuxième terminal est entendu, dans un premier temps, un ou plusieurs deuxièmes terminaux du deuxième utilisateur, notamment un deuxième groupe de deuxièmes terminaux du deuxième utilisateur.

De manière plus générale, la session peut être établie avec n utilisateurs. C'est pourquoi, par au moins un deuxième terminal est aussi entendu un ou plusieurs deuxièmes à nièmes terminaux des deuxième à nièmes utilisateurs, notamment un ou des iième(s) groupe(s) de iièmes terminaux des iième(s) utilisateur(s) (avec i entiers compris en 2 et n).

En résumé, un procédé de contrôle comporte, notamment, les étapes suivantes :
- lorsqu'un premier utilisateur U1 souhaite établir une conversation avec un deuxième utilisateur U2, il envoie une invitation à communiquer, réalisée en envoyant une invitation inv(U1, U2) à établir une session de messagerie (ou messaging en anglais), par exemple.
- Comme les premier et deuxième utilisateurs U1 et U2 possèdent chacun plusieurs terminaux et souhaitent indifféremment pourvoir recevoir les messages et y répondre depuis leurs multiples terminaux, le procédé de contrôle permet de lever les limites actuelles de la techniques en établissement une session de groupe entre les premiers terminaux du premier utilisateur U1, incluant, notamment un premier serveur de messagerie AS1 (illustré sur les figures 4A à 4C) du premier utilisateur U1- lequel premier serveur AS1 établit une session SSXi en "one to one" (anglicisme pour point à point signifiant qu'il y a un seul dispositif interlocuteur à chaque extrémité de la session) avec un deuxième serveur B, lequel crée une session de groupe avec les deuxièmes terminaux du deuxième utilisateur U2.

Les figures 2A et 2B illustrent les échanges entre divers dispositifs d'un réseau de communication lors de l'établissement d'une session SSX par un premier utilisateur U1, utilisant pour cette session SSX deux de ses terminaux T11 et T13, vers un deuxième utilisateur U2, utilisant pour cette session SSX ses deux terminaux T21 et T22. Les divers dispositifs comportent respectivement:
- des premier et deuxième dispositifs de contrôle CF1 et CF2 et dispositifs de participation PF1 et PF2, et
- des premier et deuxième dispositifs de contrôle et de participation CPF1 et CPF2 constitué en particulier par des dispositifs de contrôle assurant la gestion de l'acheminement des invitations d'établissement de session.

Comme le montre la figure 2A, dans un premier temps, un premier utilisateur U1, par exemple un client CPM, décide de rentrer en relation avec un deuxième utilisateur U2, par exemple un autre client CPM ou un client non CPM. L'utilisateur U1 envoie une invitation à une session SSX de messagerie à destination du deuxième utilisateur U2: *inv U1 → U2* (par exemple une Invitation à une Session CPM ou CPM Session Invitation en anglais: *invite User 1 => User 2* en langage SIP). Pour cela, un de ses terminaux T11 de l'utilisateur U1 envoie l'invitation *inv U1 → U2* à un premier dispositif de participation PF1 associé au premier utilisateur U1.

Dans un mode de réalisation particulier, le premier dispositif de participation PF1 agit, notamment, comme un dispositif de liaison entre des serveurs de messagerie de deux opérateurs (B2BUA, Business to Business en Anglais). Le premier dispositif de participation PF1 agit alors à ce stade comme relais.

L'invitation *inv U1 → U2* est alors transmise par le premier dispositif de participation PF1 à un deuxième dispositif de participation PF2 associé au deuxième utilisateur U2.

Dans un mode de réalisation particulier illustré par la figure 2A où le premier dispositif de participation PF1 a pour rôle l'acheminement des invitations et un premier dispositif de contrôle CF1 a pour rôle l'émission des invitations: Le premier dispositif de participation PF1 transmet l'invitation *inv U1 → U2* à un premier dispositif de contrôle CF1 qui gère l'émission de l'invitation d'établissement de session. Cette invitation est acheminée (représenté par le cercle sur la flèche d'échange) par le premier dispositif de participation PF1 à un deuxième dispositif de participation PF2 associé au deuxième utilisateur U2.

Pour cela, dans un mode de réalisation particulier, le premier dispositif de participation PF1 mettant en œuvre une fonction de participation CPM (CPM Participating Function) exécute le contrôle de service expéditeur (originating service control en anglais) nécessaire et envoie l'invitation à un premier dispositif cœur SIP/IP (SIP/IP Core en anglais) - non illustré - associé au premier utilisateur U1 qui transmet (route en anglais) l'invitation à un deuxième dispositif cœur SIP/IP (non illustré) associé au deuxième utilisateur U2. Ensuite, le deuxième dispositif cœur SIP/IP transmet (route en anglais) l'invitation au deuxième dispositif de participation PF2.

Dans un mode particulier de réalisation, ce deuxième dispositif de participation PF2 est identifié grâce à une adresse associé au deuxième utilisateur présente dans l'invitation (notamment l'adresse CPM dan un mode de réalisation CPM). En outre, dans une variante de réalisation, l'identification nécessite outre l'adresse du deuxième utilisateur l'utilisation de caractéristiques (par exemple CPM Feature Tag) sur les capacités et les services du deuxième utilisateur, plus précisément, de son réseau domestique (CPM Home Network en anglais) comportant le deuxième dispositif de participation PF2, un deuxième dispositif de contrôle CF2, et au moins un deuxième terminal T21, T22. En particulier ces caractéristiques sont disponibles dans des messages de contrôle du service de session d'échange ou service CPM.

Le deuxième dispositif de participation PF2 reçoit l'invitation *inv U1 → U2* du premier dispositif de participation PF1. Le deuxième dispositif de participation PF2 agit comme un dispositif de liaison entre des serveurs de messagerie de deux opérateurs (B2BUA, back to Back user agent en Anglais).

Pour cela, dans un mode de réalisation particulier, le deuxième dispositif de participation PF2 mettant en œuvre une fonction de participation CPM (CPM Participating Function) exécute le contrôle de service destinataire (terminating service control en anglais) nécessaire et reçoit l'invitation du deuxième dispositif cœur SIP/IP (SIP/IP Core en anglais) - non illustré.

En se basant sur des préférences du deuxième utilisateur U2, le deuxième dispositif de participation PF2 vérifie toutes les adresses des deuxièmes terminaux T21, T22 du deuxième utilisateur U2 enregistrés et envoie une invitation comportant la deuxième liste des deuxièmes terminaux L2 participant à la session à un deuxième dispositif de contrôle CF2 associé au deuxième utilisateur U2: *inv U1 → U2, L2*=*{T21, T22} (invite User 1* => *User 2, devices1&2* en langage SIP). Dans un mode particulier de réalisation, cette invitation est une invitation de groupe ad-hoc.

Le deuxième dispositif de contrôle CF2 crée un deuxième groupe de deuxièmes terminaux GR2= T21, T22 en envoyant des invitations destinées à chacun des deuxièmes terminaux concernés, respectivement *inv U1 → T21, inv U1 → T22.*

Dans un mode de réalisation particulier illustré par la figure 2A, le deuxième dispositif de contrôle CF2 envoie les invitations destinées à chacun des deuxièmes terminaux concernés, respectivement *inv U1 → T21, inv U1 → T22,* au deuxième dispositif de participation PF2 qui les acheminent vers le deuxièmes terminaux concernés T21 et T22.

Dans un mode de réalisation particulier, ces invitations permettent de crée une conférence de groupe ad-hoc avec les différents deuxièmes terminaux T21 et T22 du deuxième utilisateur U2.

Dans un mode de réalisation particulier, l'établissement de la session n'a lieu que lorsque les différents terminaux et dispositifs intervenant dans une session a accepté l'invitation. Notamment, comme l'illustre la figure 2A, les deuxièmes terminaux T21 et T22 acceptent l'invitation avec une réponse de type OK (ou 200 OK en langage SIP) à destination du premier utilisateur U1. Ces réponses OK sont d'abord reçues par le deuxième dispositif de participation PF2 qui les achemine vers le deuxième dispositif de contrôle CF2 qui transmet une réponse pour le deuxième groupe, i.e. pour le deuxième utilisateur U2, au deuxième dispositif de participation PF2 qui l'envoie vers le premier dispositif de participation PF1 qui l'achemine vers le premier dispositif de contrôle CF1.

Dans un mode de réalisation particulier, le deuxième dispositif cœur SIP/IP reçoit la réponse OK du deuxième dispositif de participation PF2 et l'envoie vers le premier dispositif cœur SIP/IP qui la transmet au premier dispositif de participation PF1.

Dans le mode de réalisation particulier de la figure 2A, le premier dispositif de contrôle CF1 gère alors les émissions des invitations pour les terminaux du premier utilisateur U1. Tout d'abord, le premier dispositif de contrôle répond OK à destination du premier terminal T11 à l'initiative de la session. Cette réponse est acheminée par le premier dispositif de participation PF1.

En se basant sur des préférences du premier utilisateur U1, le premier dispositif de participation PF1 vérifie toutes les adresses des premiers terminaux T11, T12, T13 du premier utilisateur U1 enregistrés et envoie une invitation comportant la liste des premiers terminaux L1 participant à la session à un premier dispositif de contrôle CF1 associé au premier utilisateur U1: *inv U1 → U1, L1*=*{T11, T13}* (*invite User 1 => User 1, devices1&3* en langage SIP). Dans un mode particulier de réalisation, cette invitation est une invitation de groupe ad-hoc.

Le premier dispositif de contrôle CF1 crée un premier groupe de premiers terminaux GR1= T11, T13 en envoyant des invitations destinées à chacun des premiers terminaux concernés, respectivement *inv U1 → T13.* Dans le mode de réalisation particulier de la figure 2A, les invitations ne comportent pas le premier terminal T11 à l'initiative de la session. L'invitation *inv U1 → T13* est envoyée au premier dispositif de participation PF1 qui l'achemine vers le premier terminal T13 destinataire.

Dans un mode de réalisation particulier, ces invitations permettent de crée une conférence de groupe ad-hoc avec les différents premiers terminaux T11 et T13 du premier utilisateur U1.

Durant la session SSX ainsi établie, les données sont échangées entre les premier et deuxième dispositifs de contrôle CF1 et CF2 et affichés sur l'ensemble des premiers et deuxièmes terminaux T11, T13 et T21, T22.

Dans un mode de réalisation particulier, la session SSX est découpée en trois sessions:
- une première session SSX1, dite session de groupe, entre le premier groupe GR1 et le premier dispositif de contrôle CF1,
- une session intermédiaire SSXi entre le premier dispositif de contrôle CF1 et le deuxième dispositif de contrôle CF2, et
- une deuxième session SSX2, dite session de groupe, entre le deuxième groupe GR2 et le deuxième dispositif de contrôle CF2.

Dans ce mode de réalisation particulier, le premier dispositif de participation PF1 envoie :
- une invitation *inv U1 → U1, L1*=*{T11, T13}* d'établissement de la première session SSX1 au premier dispositif de contrôle CF1, et
- une invitation *inv U1 → U2* d'établissement de la session intermédiaire SSXi au deuxième dispositif de participation.
Le deuxième dispositif de participation PF2 relaie cette invitation en tant qu'invitation *inv U1 → U2, L2*=*{T21, T22}* d'établissement de la deuxième session SSX2 au deuxième dispositif de contrôle CF2.

Les invitations *inv U1 → T11, inv U1* → *T13* du premier dispositif de contrôle CF1 aux premiers terminaux du premier groupe GR1 participe à l'établissement de la première session SSX1. Et, les invitations *inv U1 → T21, inv U1 → T22* du deuxième dispositif de contrôle CF2 aux deuxièmes terminaux du deuxième groupe GR2 participe à l'établissement de la deuxième session SSX2.

Comme le montre la figure 2B, un premier utilisateur U1 envoie une invitation à une session SSX de messagerie à destination du deuxième utilisateur U2: *inv U1 → U2.* Pour cela, un des terminaux T11 du premier utilisateur U1 envoie l'invitation *inv U1 → U2* à un premier dispositif de contrôle et participation CPF1 associé au premier utilisateur U1.

L'invitation *inv U1 → U2* est alors transmise par le premier dispositif de contrôle et participation CPF1 à un deuxième dispositif de contrôle participation CPF2 associé au deuxième utilisateur U2.

Le deuxième dispositif de contrôle et participation CPF2 reçoit l'invitation *inv U1 → U2* du premier dispositif de contrôle et participation CPF1. Le deuxième dispositif de contrôle et participation CPF2 agit comme un dispositif de liaison entre des serveurs de messagerie de deux opérateurs (B2BUA, back to Back user agent en Anglais).

En se basant sur des préférences du deuxième utilisateur U2, le deuxième dispositif de contrôle et participation CPF2 vérifie toutes les adresses des deuxièmes terminaux T21, T22 du deuxième utilisateur U2 enregistrés et détermine une deuxième liste des deuxièmes terminaux L2 participant à la session.

Le deuxième dispositif de contrôle et participation CPF2 crée un deuxième groupe de deuxièmes terminaux GR2= T21, T22 en envoyant des invitations destinées à chacun des deuxièmes terminaux concernés, respectivement *inv U1 → T21, inv U1 → T22.*

Dans un mode de réalisation particulier, ces invitations permettent de crée une conférence de groupe ad-hoc avec les différents deuxièmes terminaux T21 et T22 du deuxième utilisateur U2.

En se basant sur des préférences du premier utilisateur U1, le premier dispositif de contrôle et participation CPF1 vérifie toutes les adresses des premiers terminaux T11, T12, T13 du premier utilisateur U1 enregistrés et détermine une liste des premiers terminaux L1 participant à la session.

Le premier dispositif de contrôle et participation CPF1 crée un premier groupe de premiers terminaux GR1= T11, T13 en envoyant une invitation destinée à chacun des premiers terminaux concernés, respectivement *inv U1 → T13.* Dans le mode de réalisation particulier de la figure 2B, les invitations ne comportent pas le premier terminal T11 à l'initiative de la session.

Dans un mode de réalisation particulier, cette invitation permet de crée une conférence de groupe ad-hoc avec les différents premiers terminaux T11 et T13 du premier utilisateur U1.

Durant la session SSX ainsi établie, les données sont échangées entre les premier et deuxième dispositifs de contrôle CF1 et CF2 et affichés sur l'ensemble des premiers et deuxièmes terminaux T11, T13 et T21, T22.

Dans un mode de réalisation particulier, la session SSX est découpée en trois sessions:
- une première session SSX1, dite session de groupe, entre le premier groupe GR1 et le premier dispositif de contrôle et participation CPF1,
- une session intermédiaire SSXi entre le premier dispositif de contrôle et participation CPF1 et le deuxième dispositif de contrôle et participation CPF2, et
- une deuxième session SSX2, dite session de groupe, entre le deuxième groupe GR2 et le deuxième dispositif de contrôle et participation CPF2.

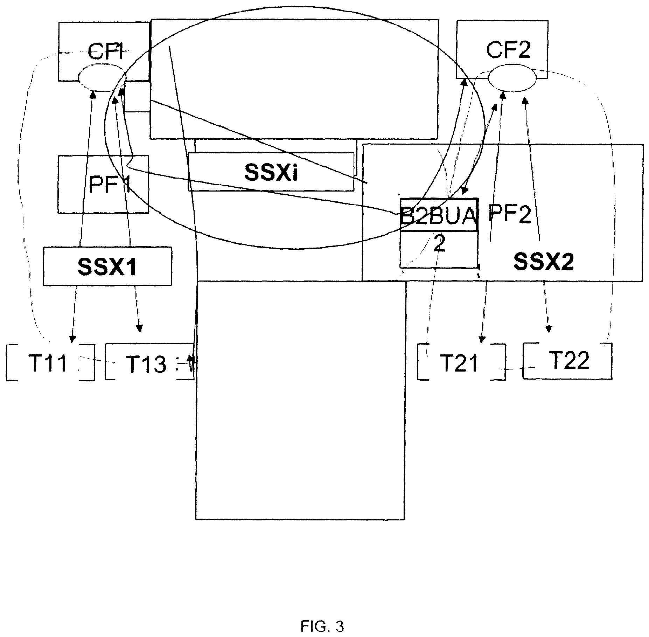

La figure 3 illustre de manière simplifiée un système de communication mettant en œuvre l'invention. Le premier utilisateur U1 est représenté par ses premiers terminaux T11 et T13, un premier dispositif de participation PF1 et un premier dispositif de contrôle CF1. Le deuxième utilisateur U2 est représenté par ses deuxièmes terminaux T21 et T22, un deuxième dispositif de participation PF2 et un deuxième dispositif de contrôle CF2.

Les premiers et deuxièmes dispositifs de contrôle CF1 et CF2 gèrent, respectivement, les première et deuxième sessions de groupe SSX1 et SSX2 au travers, respectivement, des premier et deuxième dispositifs de participation PF1 et PF2. les premier et deuxième dispositifs de contrôle CF1 et CF2 gèrent en outre la session intermédiaire SSXi: session point à point avec le deuxième utilisateur U2. Cette session est acheminée par les premier et deuxième dispositifs de participation PF1 et PF2 vers le deuxième dispositif de contrôle. Dans le mode de réalisation particulier de la figure 3, le premier utilisateur U1 étant à l'initiative de la session SSX, le deuxième dispositif de participation PF2 agissant en B2BUA.

La figure 4A illustre le cas les deux utilisateurs utilisent plusieurs terminaux: un premier utilisateur U1 utilisant plusieurs premiers terminaux T11, T12 rentre en relation avec un deuxième utilisateur U2 utilisant plusieurs deuxième terminaux T21, T22, T13.

Une invitation 2. *inv U1 → U2* (en particulier, CPM Session Invitation) est transmise (routed en anglais) d'un premier serveur AS1 invitant associé à un premier utilisateur U1 (en particulier, un premier réseau servant le premier utilisateur U1 invitant ou network serving the inviting CPM User 1 en anglais) à un deuxième serveur AS2 associé à un deuxième utilisateur U2 invitant (en particulier, un premier réseau servant le deuxième utilisateur U2 invitant ou network serving the invited CPM User 2).

### Début de la session (Session Initiation en anglais)

### Serveur Invitant AS1

Afin d'établir une session de messagerie, notamment une session CPM 1-1 ou CPM 1-1 Session en anglais, le client invitant en l'occurrence le premier terminal T11 du premier utilisateur U1 de la figure 4A (inviting CPM Client en anglais) envoie une invitation 1. *inv U1* → *U2,* au premier serveur AS1.

Dans un mode particulier de réalisation, une invitation de session CPM (CPM Session Invitation en anglais) est envoyée à un premier dispositif cœur SIP/IP (non illustré) servant le premier utilisateur U1 invitant (SIP/IP core serving the inviting CPM Client), notamment à un premier dispositif cœur SIP/IP du premier serveur AS1 invitant.

Dans un mode de réalisation particulier, l'invitation *1. inv U1 → U2* envoyée comporte des caractéristiques (par exemple CPM Feature Tag) sur des capacités et des services du destinataire, en l'occurrence un deuxième utilisateur U2. Ces caractéristiques sont utilisées par le premier serveur AS1 (dans le mode de réalisation particulier ci-dessus, le deuxième dispositif cœur) pour transmettre (route en anglais) l'invitation à un premier dispositif de participation PF1 associé au premier utilisateur U1 invitant. Ces caractéristiques sont introduites dans l'invitation par le client, en l'occurrence le premier terminal T11 du premier utilisateur U1 invitant.

L'invitation *1. inv U1 → U2* comporte l'adresse du deuxième utilisateur U2 invité, utilisateur CPM ou non-CPM par exemple. Cette adresse est introduite dans l'invitation par le client, en l'occurrence le premier terminal T11 du premier utilisateur U1 invitant.

Dans un mode de réalisation particulier; un premier dispositif de participation PF1 du premier serveur AS1 reçoit l'invitation *1. inv U1 → U2.*

Dans un mode de réalisation particulier, le premier dispositif de participation PF1 comporte des moyens de détermination, sur la base de l'invitation reçue, apte à déterminer si le premier dispositif de participation PF1 poursuit ou non l'établissement de la session.

Dans un mode de réalisation particulier, le premier dispositif de participation PF1 comporte des moyens de transmission à un dispositif de sélection de coopération (Interworking Selection en anglais) si une coopération intervient dans l'établissement de la session, sur la base de l'invitation reçue. En particulier, les moyens de transmission sont aptes à permettre la transmission au dispositif de sélection de coopération via un deuxième dispositif cœur SIP/IP. Une coopération intervient notamment lorsque l'un des utilisateurs n'utilise pas le même service de messagerie: par exemple le premier utilisateur U1 invitant est un utilisateur CPM mais pas le deuxième utilisateur U2 destinataire.

Le premier dispositif de participation PF1 comporte, d'une part, des moyens de transmission (route en anglais) de l'invitation reçue à un deuxième utilisateur U2 invité, sur la base de l'invitation reçue. Dans un mode de réalisation particulier, l'invitation *2. inv U1* → *U2* est transmise via un deuxième dispositif cœur SIP/IP associé au deuxième utilisateur U2 invité.

Dans un mode particulier de réalisation, le premier dispositif de participation PF1 décide s'il reste ou non dans la chaine de transmission de données (media path en anglais) pour cette session. Cette décision est notamment prise en fonction de règles du fournisseur de service (service provider policies en anglais).

D'autre part, premier dispositif de participation PF1 comporte des moyens de transmission (route en anglais), suite à la réception de l'invitation, d'une invitation modifiée *10. inv U1 → U1, L1* (par exemple comportant les adresses des premiers terminaux T11, T12 déterminé préalablement) à un premier dispositif de contrôle CF1 du premier utilisateur U1 invitant notamment via un premier dispositif cœur SIP/IP.

Dans un mode de réalisation particulier, le premier dispositif de participation PF1 comporte des moyens de modification d'une invitation, en l'occurrence l'invitation reçue *1. inv U1* → *U2*, apte à permettre l'établissement d'une session avec un premier groupe de premiers terminaux, ledit premier groupe ayant été crée à partir de l'invitation modifiée *10. inv U1 → U1, L1.*

Dans un mode particulier de réalisation, le premier dispositif de participation PF1 détermine les premiers terminaux (en particulier, CPM Client) qui ne doivent pas recevoir l'invitation en fonction de critères tels que, notamment, les flux média offerts dans l'invitation, les capacités des premiers terminaux, les préférences du premier utilisateur UP1 et les règles du fournisseur de service.

Le premier dispositif de contrôle CF1 comporte des moyens d'établissement d'une session avec un premier groupe GR1 de premiers terminaux créé après réception de l'invitation *10. inv U1 → U1, L1.* Notamment, comme l'illustre la figure 4A, le premier dispositif de contrôle CF1 comporte des moyens de transmission de l'invitation à chacun des premiers terminaux T11, T12 concernés, en particulier via le premier dispositif cœur SIP/IP, respectivement 11a. Inv U1→ T11, 11b. Inv U1→ T12.

En particulier, le premier dispositif de contrôle CF1 comporte des moyens de création de groupe de terminaux, notamment de groupe ad hoc, ou d'utilisation de groupe prédéfini (pre-defined group en anglais) avec toutes les adresses des premiers terminaux T11, T12 du premier utilisateur U1 invité.

### Serveur Invité AS2

Le deuxième dispositif de participation PF2 du deuxième serveur AS2 associé au deuxième utilisateur U2 invité reçoit l'invitation *2. inv U1 → U2.* Dans un mode de réalisation particulier, un deuxième dispositif cœur associé au deuxième utilisateur U2 invité transmet (route en anglais) l'invitation *2. inv U1 → U2* au deuxième dispositif de participation PF2. Cette transmission est faite, notamment sur la base des caractéristiques (CPM Feature Tag en particulier) insérées dans l'invitation.

Dans un mode de réalisation particulier, le deuxième dispositif de participation PF2 comporte des moyens de vérification du service de messagerie dont dépend l'adresse du deuxième utilisateur U2 à la réception de l'invitation *2. inv U1 → U2.*

Le deuxième dispositif de participation PF2 comporte des moyens de rejet de l'invitation sur la base de l'invitation reçue. Dans un mode particulier de réalisation, le rejet est décidé si:
- les préférences UP2 du deuxième utilisateur U2 prévoient le rejet des invitations de sessions (par exemple sur la base de l'adresse de l'expéditeur, la non divulgation de l'identité de l'émetteur, ou de requête de flux média), et/ou
- aucun deuxième terminal n'est enregistré en particulier pour le type de service de messagerie prévu par l'invitation (notamment, pas de CPM client enregistré pour le deuxième utilisateur U2 récepteur).

Dans un mode particulier de réalisation, le deuxième dispositif de participation PF2 comporte des moyens de vérification des préférences UP2 du deuxième utilisateur U2 sur les deuxièmes terminaux auxquels l'invitation doit être transmise si plusieurs deuxièmes terminaux sont enregistrés.

Le deuxième dispositif de participation PF2 comporte des moyens de modification d'une invitation, en l'occurrence l'invitation reçue *2. inv U1 → U2,* apte à permettre l'établissement d'une session avec un deuxième terminal, *4. inv U1 → TU2, L2.*

Dans un mode particulier de réalisation, le deuxième dispositif de participation PF2 détermine les deuxièmes terminaux (en particulier, CPM Client) qui ne doivent pas recevoir l'invitation en fonction de critères tels que, notamment, les flux média offerts dans l'invitation, les capacités des premiers terminaux, les préférences du deuxième utilisateur UP2 et les règles du fournisseur de service.

Dans un mode de réalisation particulier, le deuxième dispositif de participation PF2 comporte des moyens de détermination, sur la base de l'invitation reçue, apte à déterminer si le deuxième dispositif de participation PF2 poursuit ou non l'établissement de la session.

Si l'établissement de la session est poursuivi, le deuxième dispositif de participation PF2 agit comme un dispositif de liaison entre des serveurs de messagerie de deux opérateurs (B2BUA, back to Back user agent en Anglais).

Dans l'exemple de la figure 4A, le deuxième dispositif de participation PF2 du deuxième utilisateur invité U2 envoie l'invitation modifiée *4. inv U1 → U2, L2* (par exemple comportant les adresses du deuxième terminal T21 déterminées précédemment) à un deuxième dispositif de contrôle CF2 du deuxième utilisateur U2 invité notamment via un deuxième dispositif cœur SIP/IP.

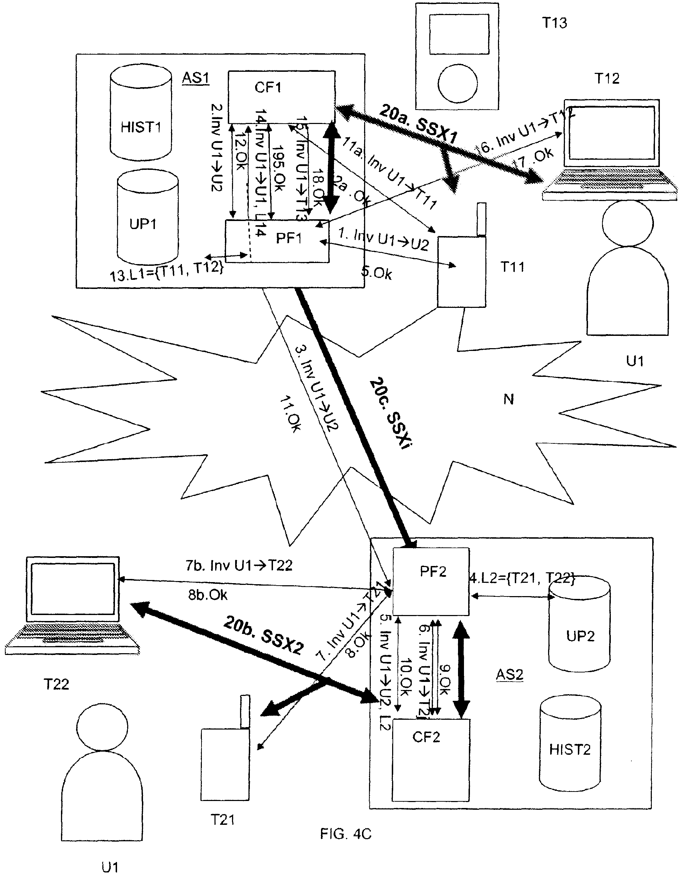

Le deuxième dispositif de contrôle CF2 comporte des moyens d'établissement d'une session avec un deuxième groupe GR2 de deuxièmes terminaux créés après réception de l'invitation *4. inv U1 → U2, L2.* Notamment, comme l'illustre la figure 4C, le deuxième dispositif de contrôle CF2 comporte des moyens de transmission de l'invitation au deuxième terminal T21 concerné, en particulier via le deuxième dispositif cœur SIP/IP, respectivement 5. Inv U1 → T21.

En particulier, le deuxième dispositif de contrôle CF2 comporte des moyens de création de groupe de terminaux, notamment de groupe ad hoc, ou d'utilisation de groupe prédéfini (pre-defined group en anglais) avec toutes les adresses du deuxième terminal T21 du deuxième utilisateur U2 invité.

Dans un mode particulier de réalisation, le deuxième dispositif de contrôle CF2 comporte des moyens de transmission à un dispositif de sélection de coopération (Interworking Selection en anglais) si nécessaire pour ce deuxième terminal T21, notamment si une coopération intervient dans l'établissement de la session, sur la base de l'invitation reçue. En particulier, les moyens de transmission sont aptes à permettre la transmission au dispositif de sélection de coopération via un premier dispositif cœur SIP/IP.

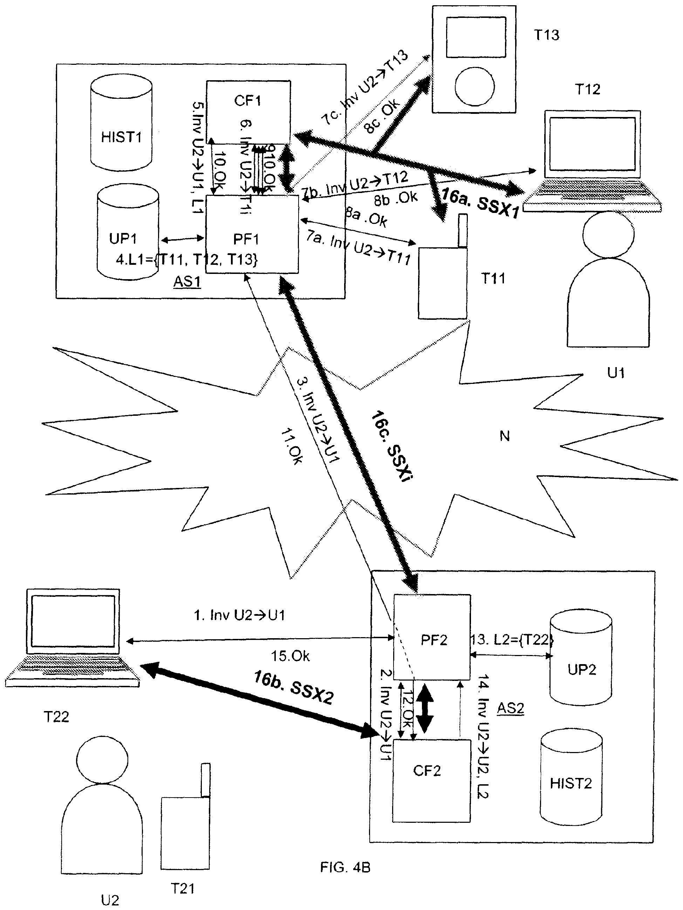

La figure 4B illustre le cas où un deuxième utilisateur U2 utilisant un seul deuxième terminal T22 rentre en relation avec un premier utilisateur U1 utilisant plusieurs premiers terminaux T11, T12, T13.

Une invitation *2. inv U2 → U1* (en particulier, CPM Session Invitation) est transmise (routed en anglais) d'un deuxième serveur AS2 invitant associé à un deuxième utilisateur U2 (en particulier, un deuxième réseau servant le deuxième utilisateur U2 invitant ou network serving the inviting CPM User 2 en anglais) à un premier serveur AS1 associé à un premier utilisateur U1 invité (en particulier, un premier réseau servant le premier utilisateur U1 invité ou network serving the invited CPM User 1).

### Début de la session (Session Initiation en anglais)

### Serveur Invitant AS2

Afin d'établir une session de messagerie, notamment une session CPM 1-1 ou CPM 1-1 Session en anglais, le client invitant en l'occurrence le deuxième terminal T22 du deuxième utilisateur U2 de la figure 4B (inviting CPM Client en anglais) envoie une invitation *1. inv U2 → U1*, au deuxième serveur AS2.

Dans un mode particulier de réalisation, une invitation de session CPM (CPM Session Invitation en anglais) est envoyée à un deuxième dispositif cœur SIP/IP (non illustré) servant le deuxième utilisateur U2 invitant (SIP/IP core serving the inviting CPM Client), notamment à un deuxième dispositif cœur SIP/IP du deuxième serveur AS2 invitant.

Dans un mode de réalisation particulier, l'invitation *1. inv U2 → U1* envoyée comporte des caractéristiques (par exemple CPM Feature Tag) sur des capacités et des services du destinataire, en l'occurrence un premier utilisateur U1. Ces caractéristiques sont utilisées par le deuxième serveur AS2 (dans le mode de réalisation particulier ci-dessus, le deuxième dispositif cœur) pour transmettre (route en anglais) l'invitation à un deuxième dispositif de participation PF2 associé au deuxième utilisateur U2 invitant. Ces caractéristiques sont introduites dans l'invitation par le client, en l'occurrence le deuxième terminal T22 du deuxième utilisateur U2 invitant.

L'invitation *1. inv U2 → U1* comporte l'adresse du premier utilisateur U1 invité, utilisateur CPM ou non-CPM par exemple. Cette adresse est introduite dans l'invitation par le client, en l'occurrence le deuxième terminal T22 du deuxième utilisateur U2 invitant.

Dans un mode de réalisation particulier; un deuxième dispositif de participation PF2 du deuxième serveur AS2 reçoit l'invitation *1. inv U2 → U1.*

Dans un mode de réalisation particulier, le deuxième dispositif de participation PF2 comporte des moyens de détermination, sur la base de l'invitation reçue, apte à déterminer si le deuxième dispositif de participation PF2 poursuit ou non l'établissement de la session.

Dans un mode de réalisation particulier, le deuxième dispositif de participation PF2 comporte des moyens de transmission à un dispositif de sélection de coopération (Interworking Selection en anglais) si une coopération intervient dans l'établissement de la session, sur la base de l'invitation reçue. En particulier, les moyens de transmission sont aptes à permettre la transmission au dispositif de sélection de coopération via un deuxième dispositif cœur SIP/IP. Une coopération intervient notamment lorsque l'un des utilisateurs n'utilise pas le même service de messagerie: par exemple le deuxième utilisateur U2 invitant est un utilisateur CPM mais pas le premier utilisateur U1 destinataire.

Le deuxième dispositif de participation PF2 comporte des moyens de transmission (route en anglais) de l'invitation reçue à un premier utilisateur U1 invité, sur la base de l'invitation reçue. Dans un mode de réalisation particulier, l'invitation *2. inv U2* → *U1* est transmise via un premier dispositif cœur SIP/IP associé au premier utilisateur U1 invité.

Dans un mode particulier de réalisation, le deuxième dispositif de participation PF2 décide s'il reste ou non dans la chaine de transmission de données (media path en anglais) pour cette session. Cette décision est notamment prise en fonction de règles du fournisseur de service (service provider policies en anglais).

### Serveur Invité AS1

Le premier dispositif de participation PF1 du premier serveur AS1 associé au premier utilisateur U1 invité reçoit l'invitation *2. inv U2 → U1.* Dans un mode de réalisation particulier, un premier dispositif cœur associé au premier utilisateur U1 invité transmet (route en anglais) l'invitation *2. inv U2* → *U1* au premier dispositif de participation PF1. Cette transmission est faite, notamment sur la base des caractéristiques (CPM Feature Tag en particulier) insérées dans l'invitation.

Dans un mode de réalisation particulier, le premier dispositif de participation PF1 comporte des moyens de vérification du service de messagerie dont dépend l'adresse du premier utilisateur U1 à la réception de l'invitation *2. inv U2 → U1.*

Le premier dispositif de participation PF1 comporte des moyens de rejet de l'invitation sur la base de l'invitation reçue. Dans un mode particulier de réalisation, le rejet est décidé si:
- les préférences UP1 du premier utilisateur U1 prévoient le rejet des invitations de sessions (par exemple sur la base de l'adresse de l'expéditeur, la non divulgation de l'identité de l'émetteur, ou de requête de flux média), et/ou
- aucun premier terminal n'est enregistré en particulier pour le type de service de messagerie prévu par l'invitation (notamment, pas de CPM client enregistré pour le premier utilisateur U1 récepteur).

Dans un mode particulier de réalisation, le premier dispositif de participation PF1 comporte des moyens de vérification des préférences UP1 du premier utilisateur U1 sur les premiers terminaux auxquels l'invitation doit être transmise si plusieurs premiers terminaux sont enregistrés.

Le premier dispositif de participation PF1 comporte des moyens de modification d'une invitation, en l'occurrence l'invitation reçue *2. inv U2* → *U1,* apte à permettre l'établissement d'une session avec un premier groupe de premiers terminaux, ledit premier groupe ayant été crée à partir de l'invitation modifiée *4. inv U2 → U1, L1*

Dans un mode particulier de réalisation, le premier dispositif de participation PF1 détermine les premiers terminaux (en particulier, CPM Client) qui ne doivent pas recevoir l'invitation en fonction de critères tels que, notamment, les flux média offerts dans l'invitation, les capacités des premiers terminaux, les préférences du premier utilisateur UP1 et les règles du fournisseur de service.

Dans un mode de réalisation particulier, le premier dispositif de participation PF1 comporte des moyens de détermination, sur la base de l'invitation reçue, apte à déterminer si le premier dispositif de participation PF1 poursuit ou non l'établissement de la session.

Si l'établissement de la session est poursuivi, le premier dispositif de participation agit comme un dispositif de liaison entre des serveurs de messagerie de deux opérateurs (B2BUA, back to Back user agent en Anglais).

Dans l'exemple de la figure 4B, le premier dispositif de participation PF1 du premier utilisateur invité U1 envoie l'invitation modifiée *4. inv U2 → U1, L1* (par exemple comportant les adresses des premiers terminaux T11, T12, et T13 déterminées précédemment) à un premier dispositif de contrôle CF1 du premier utilisateur U1 invité notamment via un premier dispositif cœur SIP/IP.

Le premier dispositif de contrôle CF1 comporte des moyens d'établissement d'une session avec un premier groupe GR1 de premiers terminaux créé après réception de l'invitation *4. inv U2 → U1, L1.* Notamment, comme l'illustre la figure 4B, le dispositif de contrôle comporte des moyens de transmission de l'invitation à chacun des premiers terminaux T11, T12, T13 concernés, en particulier via le premier dispositif cœur SIP/IP, respectivement 5a. Inv U2→ T11, 5b. Inv U2→ T12 et 5c. Inv U2→ T13.

En particulier, le premier dispositif de contrôle CF1 comporte des moyens de création de groupe de terminaux, notamment de groupe ad hoc, ou d'utilisation de groupe prédéfini (pre-defined group en anglais) avec toutes les adresses des premiers terminaux T11, T12, T13 du premier utilisateur U1 invité.

Dans un mode particulier de réalisation, le premier dispositif de contrôle CF1 comporte des moyens de transmission à un dispositif de sélection de coopération (Interworking Selection en anglais) si nécessaire pour un de ces premiers terminaux T11, T12, T13, notamment si une coopération intervient dans l'établissement de la session, sur la base de l'invitation reçue. En particulier, les moyens de transmission sont aptes à permettre la transmission au dispositif de sélection de coopération via un premier dispositif cœur SIP/IP.

La figure 4C illustre le cas les deux utilisateurs utilisent plusieurs terminaux: un premier utilisateur U1 utilisant plusieurs premiers terminaux T11, T12 rentre en relation avec un deuxième utilisateur U2 utilisant plusieurs deuxième terminaux T21, T22, T13.

Une invitation *2. inv U1 → U2* (en particulier, CPM Session Invitation) est transmise (routed en anglais) d'un premier serveur AS1 invitant associé à un premier utilisateur U1 (en particulier, un premier réseau servant le premier utilisateur U1 invitant ou network serving the inviting CPM User 1 en anglais) à un deuxième serveur AS2 associé à un deuxième utilisateur U2 invitant (en particulier, un premier réseau servant le deuxième utilisateur U2 invitant ou network serving the invited CPM User 2).

### Début de la session (Session Initiation en anglais)

### Serveur Invitant AS1

Afin d'établir une session de messagerie, notamment une session CPM 1-1 ou CPM 1-1 Session en anglais, le client invitant en l'occurrence le premier terminal T11 du premier utilisateur U1 de la figure 4C (inviting CPM Client en anglais) envoie une invitation *1. inv U1* → *U2*, au premier serveur AS1.

Dans un mode particulier de réalisation, une invitation de session CPM (CPM Session Invitation en anglais) est envoyée à un premier dispositif cœur SIP/IP (non illustré) servant le premier utilisateur U1 invitant (SIP/IP core serving the inviting CPM Client), notamment à un premier dispositif cœur SIP/IP du premier serveur AS1 invitant.

Dans un mode de réalisation particulier, l'invitation *1. inv U1 → U2* envoyée comporte des caractéristiques (par exemple CPM Feature Tag) sur des capacités et des services du destinataire, en l'occurrence un deuxième utilisateur U2. Ces caractéristiques sont utilisées par le premier serveur AS1 (dans le mode de réalisation particulier ci-dessus, le deuxième dispositif cœur) pour transmettre (route en anglais) l'invitation à un premier dispositif de participation PF1 associé au premier utilisateur U1 invitant. Ces caractéristiques sont introduites dans l'invitation par le client, en l'occurrence le premier terminal T11 du premier utilisateur U1 invitant.

L'invitation *1*. *inv U1 → U2* comporte l'adresse du deuxième utilisateur U2 invité, utilisateur CPM ou non-CPM par exemple. Cette adresse est introduite dans l'invitation par le client, en l'occurrence le premier terminal T11 du premier utilisateur U1 invitant.

Dans un mode de réalisation particulier, un premier dispositif de participation PF1 du premier serveur AS1 reçoit l'invitation *1. inv U1 → U2.*

Dans un mode de réalisation particulier, le premier dispositif de participation PF1 comporte des moyens de détermination, sur la base de l'invitation reçue, apte à déterminer si le premier dispositif de participation PF1 poursuit ou non l'établissement de la session.

Dans un mode de réalisation particulier, le premier dispositif de participation PF1 comporte des moyens de transmission à un dispositif de sélection de coopération (Interworking Selection en anglais) si une coopération intervient dans l'établissement de la session, sur la base de l'invitation reçue. En particulier, les moyens de transmission sont aptes à permettre la transmission au dispositif de sélection de coopération via un deuxième dispositif cœur SIP/IP. Une coopération intervient notamment lorsque l'un des utilisateurs n'utilise pas le même service de messagerie: par exemple le premier utilisateur U1 invitant est un utilisateur CPM mais pas le deuxième utilisateur U2 destinataire.

Le premier dispositif de participation PF1 comporte, d'une part, des moyens de transmission (route en anglais) de l'invitation reçue à un deuxième utilisateur U2 invité, sur la base de l'invitation reçue. Dans un mode de réalisation particulier, l'invitation *2. inv U1 → U2* est transmise via un deuxième dispositif cœur SIP/IP associé au deuxième utilisateur U2 invité.

Dans un mode particulier de réalisation, le premier dispositif de participation PF1 décide s'il reste ou non dans la chaine de transmission de données (media path en anglais) pour cette session. Cette décision est notamment prise en fonction de règles du fournisseur de service (service provider policies en anglais).

D'autre part, premier dispositif de participation PF1 comporte des moyens de transmission (route en anglais), suite à la réception de l'invitation, d'une invitation modifiée *10. inv U1 → U1, L1* (par exemple comportant les adresses des premiers terminaux T11, T12 déterminées préalablement) à un premier dispositif de contrôle CF1 du premier utilisateur U1 invitant notamment via un premier dispositif cœur SIP/IP.

Dans un mode de réalisation particulier, le premier dispositif de participation PF1 comporte des moyens de modification d'une invitation, en l'occurrence l'invitation reçue *1. inv U1 → U2,* apte à permettre l'établissement d'une session avec un premier groupe de premiers terminaux, ledit premier groupe ayant été crée à partir de l'invitation modifiée *10. inv U1 → U1, L1.*

Dans un mode particulier de réalisation, le premier dispositif de participation PF1 détermine les premiers terminaux (en particulier, CPM Client) qui ne doivent pas recevoir l'invitation en fonction de critères tels que, notamment, les flux média offerts dans l'invitation, les capacités des premiers terminaux, les préférences du premier utilisateur UP1 et les règles du fournisseur de service.

Le premier dispositif de contrôle CF1 comporte des moyens d'établissement d'une session avec un premier groupe GR1 de premiers terminaux créé après réception de l'invitation *10. inv U1 → U1, L1.* Notamment, comme l'illustre la figure 4C, le premier dispositif de contrôle CF1 comporte des moyens de transmission de l'invitation à chacun des premiers terminaux T11, T12 concernés, en particulier via le premier dispositif cœur SIP/IP, respectivement 11a. Inv U1→ T11, 11b. Inv U1→ T12.

En particulier, le premier dispositif de contrôle CF1 comporte des moyens de création de groupe de terminaux, notamment de groupe ad hoc, ou d'utilisation de groupe prédéfini (pre-defined group en anglais) avec toutes les adresses des premiers terminaux T11, T12 du premier utilisateur U1 invité.

### Serveur Invité AS2

Le deuxième dispositif de participation PF2 du deuxième serveur AS2 associé au deuxième utilisateur U2 invité reçoit l'invitation *2. inv U1 → U2.* Dans un mode de réalisation particulier, un deuxième dispositif cœur associé au deuxième utilisateur U2 invité transmet (route en anglais) l'invitation *2. inv U1* → *U2* au deuxième dispositif de participation PF2. Cette transmission est faite, notamment sur la base des caractéristiques (CPM Feature Tag en particulier) insérées dans l'invitation.

Dans un mode de réalisation particulier, le deuxième dispositif de participation PF2 comporte des moyens de vérification du service de messagerie dont dépend l'adresse du deuxième utilisateur U2 à la réception de l'invitation *2. inv U1 → U2.*

Le deuxième dispositif de participation PF2 comporte des moyens de rejet de l'invitation sur la base de l'invitation reçue. Dans un mode particulier de réalisation, le rejet est décidé si:
- les préférences UP2 du deuxième utilisateur U2 prévoient le rejet des invitations de sessions (par exemple sur la base de l'adresse de l'expéditeur, la non divulgation de l'identité de l'émetteur, ou de requête de flux média), et/ou
- aucun deuxième terminal n'est enregistré en particulier pour le type de service de messagerie prévu par l'invitation (notamment, pas de CPM client enregistré pour le deuxième utilisateur U2 récepteur).

Dans un mode particulier de réalisation, le deuxième dispositif de participation PF2 comporte des moyens de vérification des préférences UP2 du deuxième utilisateur U2 sur les deuxièmes terminaux auxquels l'invitation doit être transmise si plusieurs deuxièmes terminaux sont enregistrés.

Le deuxième dispositif de participation PF1 comporte des moyens de modification d'une invitation, en l'occurrence l'invitation reçue *2. inv U1 → U2,* apte à permettre l'établissement d'une session avec un deuxième groupe de deuxièmes terminaux, ledit deuxième groupe ayant été crée à partir de l'invitation modifiée *4. inv U1 → U2, L2*

Dans un mode particulier de réalisation, le deuxième dispositif de participation PF2 détermine les deuxièmes terminaux (en particulier, CPM Client) qui ne doivent pas recevoir l'invitation en fonction de critères tels que, notamment, les flux média offerts dans l'invitation, les capacités des premiers terminaux, les préférences du deuxième utilisateur UP2 et les règles du fournisseur de service.

Dans un mode de réalisation particulier, le deuxième dispositif de participation PF2 comporte des moyens de détermination, sur la base de l'invitation reçue, apte à déterminer si le deuxième dispositif de participation PF2 poursuit ou non l'établissement de la session.

Si l'établissement de la session est poursuivi, le deuxième dispositif de participation PF2 agit comme un dispositif de liaison entre des serveurs de messagerie de deux opérateurs (B2BUA, back to Back user agent en Anglais).

Dans l'exemple de la figure 4C, le deuxième dispositif de participation PF2 du deuxième utilisateur invité U2 envoie l'invitation modifiée *4. inv U1 → U2, L2* (par exemple comportant les adresses des deuxièmes terminaux T21 et T22 déterminés précédemment) à un deuxième dispositif de contrôle CF2 du deuxième utilisateur U2 invité notamment via un deuxième dispositif cœur SIP/IP.

Le deuxième dispositif de contrôle CF2 comporte des moyens d'établissement d'une session avec un deuxième groupe GR2 de deuxièmes terminaux créés après réception de l'invitation *4. inv U1 → U2, L2.* Notamment, comme l'illustre la figure 4C, le deuxième dispositif de contrôle CF2 comporte des moyens de transmission de l'invitation à chacun des deuxième terminaux T21, T22 concernés, en particulier via le deuxième dispositif cœur SIP/IP, respectivement 5a. Inv U1→ T21, 5b. Inv U1 → T22.

En particulier, le deuxième dispositif de contrôle CF2 comporte des moyens de création de groupe de terminaux, notamment de groupe ad hoc, ou d'utilisation de groupe prédéfini (pre-defined group en anglais) avec toutes les adresses des deuxièmes terminaux T21, T22 du deuxième utilisateur U2 invité.

Dans un mode particulier de réalisation, le deuxième dispositif de contrôle CF2 comporte des moyens de transmission à un dispositif de sélection de coopération (Interworking Selection en anglais) si nécessaire pour un de ces deuxièmes terminaux T21, T22, notamment si une coopération intervient dans l'établissement de la session, sur la base de l'invitation reçue. En particulier, les moyens de transmission sont aptes à permettre la transmission au dispositif de sélection de coopération via un premier dispositif cœur SIP/IP.

### Fin de la session (Closing a Session en anglais)

Cette phase n'est pas illustrée sur les figures 4A à 4C. Il s'agit de clore la session SSX, composée, notamment, des première session *20. SSX1,* session intermédiaire *20C. SSXi et deuxième session 20B. SSX2* illustrées pas les flèches en gras.

Afin de clore cette session, le premier ou deuxième terminal souhaitant clore la session, dans notre exemple le premier terminal T11, envoie une requête de clôture (en particulier CPM Session leaving request) au dispositif de participation associé, premier dispositif de participation PF1. Dans un mode de réalisation particulier cette requête est reçue par le premier dispositif cœur SIP/IP associé au terminal requérant.

Cette requête de clôture utilise un chemin de signalisation identique à celui emprunté par l'invitation à l'établissement de la session. Le premier dispositif de participation PF1 fermant la session transmet donc la requête de clôture suivant ce chemin de signalisation.

Dans un mode de réalisation particulier, le premier dispositif cœur SIP/IP transmet donc la requête de clôture suivant ce chemin de signalisation.

Le dispositif de participation tiers, deuxième dispositif de participation PF2 dans notre exemple, reçoit la requête de clôture du premier dispositif de participation PF1 et la transmet suivant ce chemin de signalisation.

### Modification de la session

Cette phase n'est pas illustrée sur les figures 4A à 4C. Il s'agit de modifier certains éléments de la session SSX, composée, notamment, d'une première session *14A. SSX1,* d'une session intermédiaire *14C. SSX et d'une deuxième session 14B. SSX2* illustrées pas les flèches en gras.

Ces modifications permettent à un utilisateur participant à la session d'ajouter un nouveau flux média, de supprimer un flux média existant ou de changer les caractéristiques d'un flux média existant.

Par exemple, afin que le premier utilisateur U1 puisse modifier la session SSX, le dispositif de participation comporte des moyens de modification de la session ainsi qu'un premier terminal T11 comporte des moyens de modification de la session à partir duquel l'utilisateur U1 spécifiera les modifications.

La modification d'une session est effectuée sur entrée de l'utilisateur, en l'occurrence du premier utilisateur U1, ou pour d'autres raisons, notamment lorsque le premier serveur AS1 détecte que la session s'est déplacée sur un réseau IP à bande passante plus étroite.

Afin de modifier cette session, le premier terminal souhaitant modifier la session, dans notre exemple le premier terminal T11, envoie une requête de modification (en particulier CPM Session modification request) au dispositif de participation associé, premier dispositif de participation PF1. Dans un mode de réalisation particulier cette requête est reçue par le premier dispositif cœur SIP/IP associé au terminal requérant.

Cette requête de clôture utilise un chemin de signalisation identique à celui emprunté par l'invitation à l'établissement de la session. Le premier dispositif de participation PF1 fermant la session transmet donc la requête de clôture suivant ce chemin de signalisation.

Dans un mode de réalisation particulier, le premier dispositif cœur SIP/IP transmet donc la requête de clôture suivant ce chemin de signalisation.

Le dispositif de participation tiers, deuxième dispositif de participation PF2 dans notre exemple, reçoit la requête de clôture du premier dispositif de participation PF1 et la transmet suivant ce chemin de signalisation, notamment si la requête de modification satisfait les préférences utilisateur UP2 et/ou les règles du fournisseur de service.

Un dispositif de contrôle CF1, CF2 est notamment apte à contrôler les invitations d'établissement de session pour l'utilisateur, respectivement U1 et U2, auquel le dispositif de contrôle est associé. Il comporte, notamment, des moyens de gestion des émissions des invitations d'établissement de session pour l'utilisateur associé.

Un dispositif de participation est apte à gérer les sessions au sens du routage, par exemple proxy SIP, pour l'utilisateur, respectivement U1 et U2, auquel le dispositif de contrôle est associé. Il comporte, notamment, des moyens d'acheminement des invitations d'établissement de session pour l'utilisateur associé.

Dans un mode de réalisation, l'architecture ne comporte pas de dispositif de participation dont les fonctions sont assurées par des moyens intégrés au dispositif de contrôle CF.

Dans un mode de réalisation particulier, les historiques des échanges sont stockés indépendamment des terminaux utilisés. Notamment les historiques sont stockés dans des dispositifs de stockages : respectivement premier et deuxième dispositif de stockage HIST1, HIST2 comme le montrent les figures 4A, 4B et 4C placés, par exemple, dans, respectivement, le premier et le deuxième serveur AS1, AS2 associé au premier et deuxième utilisateur U1, U2.

Dans un mode de réalisation particulier, les premier et deuxième utilisateurs utilisent le même service de messagerie et, en particulier, le même serveur.

L'invention vise aussi un support d'information comportant un programme d'ordinateur pour le contrôle d'une session, un support d'information comportant un programme d'ordinateur pour la participation à une session.

L'un au moins des supports d'informations peut être n'importe quelle entité ou dispositif capable de stocker le programme. Par exemple, au moins l'un des supports peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, l'un au moins des supports d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, l'un au moins des supports d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

L'invention de part son architecture peut être implémentée non seulement dans une architecture de type IMS mais aussi dans une architecture utilisant un protocole XMPP. De manière plus générale, l'invention ne dépend ni du protocole, ni de l'architecture de communication utilisés.

L'invention présente l'avantage de permettre à tous les terminaux d'un groupe de voir ce qui est écrit et envoyé par un des terminaux du groupe ce qui n'est par le cas d'une solution proposant un serveur qui crée deux branches de communication, l'une vers chacun des terminaux. En effet, dans ce cas, chacun des terminaux reçoit bien les messages du contact avec qui la conversation est établie mais par contre ne voit pas ce qui est écrit et envoyé depuis l'autre terminal.

## Revendications

1. Procédé de contrôle d'une session (SSX) d'échange de données entre des premiers terminaux (T11, T12, T13) d'un premier utilisateur (U1) avec au moins un deuxième terminal (T21, T22) d'un deuxième utilisateur (U2), **caractérisé en ce que** ledit procédé de contrôle mis en œuvre par un dispositif de contrôle comporte, après réception d'une invitation d'établissement d'une session (SSX) entre ledit premier utilisateur (inv(U1,U2), inv(U2→U1), inv(U1→U1)) et le deuxième utilisateur,
- une création (CREA) d'un premier groupe (GR1) de premiers terminaux (T11, T12, T13) du premier utilisateur adapté à l'établissement de ladite session (SSX) entre le au moins un deuxième terminal du deuxième utilisateur et ledit premier groupe (SSE (GR1, U2)),
- un établissement d'une session adaptée :
• lorsque le au moins un deuxième terminal du deuxième utilisateur émet des données, **en ce que** chacun des premiers terminaux du premier utilisateur appartenant au premier groupe reçoivent les données émises par le au moins un deuxième terminal du deuxième utilisateur ; et
• lorsque des données sont émises par un des premiers terminaux (T11, T12, T13) du premier utilisateur (U1) durant la session (SSX), **en ce que** les données émises d'un des premiers terminaux du premier utilisateur soient fournies audit au moins un deuxième terminal du deuxième utilisateur et à chacun des premiers terminaux (T11, T12, T13) du premier utilisateur appartenant audit premier groupe (GR1).

2. Procédé de contrôle selon la revendication précédente, **caractérisé en ce que** ledit premier groupe (GR1) est fonction d'une première liste (L1) de premiers terminaux (T11, T12, T13) obtenue de ladite invitation d'établissement de session (inv(U1, U2)) modifiée par ladite première liste (L1).

3. Procédé de contrôle selon l'une quelconque des revendications précédentes, **caractérisé en ce que** ledit procédé de contrôle comporte la fourniture (BD(D, GR1)) des données reçues pour le premier utilisateur (U1) durant la session (SSX) aux premiers terminaux (T11, T12, T13) appartenant audit premier groupe (GR1).

4. Procédé de contrôle selon l'une quelconque des revendications précédentes, **caractérisé en ce que** ledit procédé comporte l'affichage (BD(D, GR1)) des données émises par le premier utilisateur (U1) durant la session (SSX) sur les premiers terminaux (T11, T12, T13) appartenant audit premier groupe (GR1).

5. Procédé de contrôle selon l'une quelconque des revendications précédentes, **caractérisé en ce que** ledit procédé de contrôle comporte une gestion (MEM(HIST1, SSX)) d'un historique des échanges indépendante des premiers terminaux (T11, T12, T13) utilisés par ledit premier utilisateur (U1) pour l'émission des données.

6. Programme comprenant des instructions de code de programme pour l'exécution des étapes du procédé de contrôle selon l'une quelconque des revendications précédentes lorsque ledit programme est exécuté par un processeur.

7. Dispositif de contrôle d'une session (SSX) d'échange de données entre des premiers terminaux (T11, T12, T13) d'un premier utilisateur (U1) avec au moins un deuxième terminal (T21, T22) d'un deuxième utilisateur (U2), **caractérisé en ce que** ledit dispositif de contrôle comporte des moyens d'établissement d'une session (SSX) avec ledit premier utilisateur (U1) adaptés à l'établissement de ladite session (SSX) avec un premier groupe (GR1) de premiers terminaux (T11, T12, T13) du premier utilisateur (U1), ledit premier groupe (GR1) ayant été créé après réception, par le dispositif de contôle, d'une invitation d'établissement d'une session entre le premier utilisateur (inv(U1, U2), inv(U2→U1), inv(U1→U1)) et le deuxième utilisateur, la session étant adaptée:
• lorsque le au moins un deuxième terminal du deuxième utilisateur émet des données, **en ce que** chacun des premiers terminaux du premier utilisateur appartenant au premier groupe reçoivent les données émises par le au moins un deuxième terminal du deuxième utilisateur ; et
• lorsque des données sont émises par un des premiers terminaux (T11, T12, T13) du premier utilisateur (U1) durant la session (SSX), à ce que les données émises d'un des premiers terminaux du premier utilisateur soient fournies audit au moins un deuxième terminal du deuxième utilisateur et à chacun des premiers terminaux (T11, T12, T13) du premier utilisateur appartenant audit premier groupe (GR1).

8. Procédé de participation d'un premier utilisateur (U1) à une session (SSX) d'échange de données entre des premiers terminaux (T11, T12, T13) d'un premier utilisateur (U1) avec au moins un deuxième terminal (T21, T22) d'un deuxième utilisateur (U2), **caractérisé en ce que** ledit procédé de participation mis en œuvre par un dispositif de participation comporte une modification (MODIF(inv) d'une invitation d'établissement d'une session audit premier utilisateur (U1) adaptée à l'établissement de ladite session (SSE (GR1, U2)) entre le au moins un deuxième terminal du deuxième utilisateur et un premier groupe (GR1) de premiers terminaux (T11, T12, T13) dudit premier utilisateur (U1), ledit premier groupe (GR1) ayant été créé à partir de ladite invitation modifiée (inv(U1,U2, L1)), la session étant adaptée :
• lorsque le au moins un deuxième terminal du deuxième utilisateur émet des données, **en ce que** chacun des premiers terminaux du premier utilisateur du premier groupe reçoivent les données émises par le au moins un deuxième terminal du deuxième utilisateur ; et
• lorsque des données sont émises par un des premiers terminaux (T11, T12, T13) du premier utilisateur (U1) durant la session (SSX), à ce que les données émises d'un des premiers terminaux soient fournies audit au moins un deuxième terminal du deuxième utilisateur et à chacun des premiers terminaux (T11, T12, T13) appartenant audit premier groupe (GR1).

9. Procédé de participation selon la revendication précédente, **caractérisée en ce que** ladite modification (MODIF(inv)) comporte une substitution d'une adresse du premier utilisateur (U1) par une liste de premiers terminaux (L1) dans ladite invitation d'établissement de session au premier utilisateur (inv(U1,U2))).

10. Programme comprenant des instructions de code de programme pour l'exécution des étapes du procédé de participation selon l'une quelconque des revendications 9 ou 10 lorsque ledit programme est exécuté par un processeur.

11. Dispositif de participation d'un premier utilisateur (U1) à une session (SSX) d'échange de données entre des premiers terminaux (T11, T12, T13) d'un premier utilisateur (U1) avec au moins un deuxième terminal (T21, T22) d'un deuxième utilisateur (U2), **caractérisé en ce que** ledit dispositif de participation comporte des moyens de modification d'une invitation d'établissement d'une session audit premier utilisateur (inv(U1, U2), inv(U2→U1), inv(U1→U1)) adaptée à l'établissement de ladite session (SSX) entre le au moins un deuxième terminal du deuxième utilisateur et un premier groupe (GR1) de premiers terminaux (T11, T12, T13) dudit premier utilisateur (U1), ledit premier groupe (GR1) ayant été créé à partir de ladite invitation modifiée (inv(U1, U2, L1), inv(U2→U1, L1), inv(U1→U1, L1)), la session étant adaptée:
• lorsque le au moins un deuxième terminal du deuxième utilisateur émet des données, **en ce que** chacun des premiers terminaux du premier utilisateur du premier groupe reçoivent les données émises par le au moins un deuxième terminal du deuxième utilisateur ; et
• lorsque des données sont émises par un des premiers terminaux (T11, T12, T13) du premier utilisateur (U1) durant la session (SSX), à ce que les données émises d'un des premiers terminaux du premier utilisateur soient fournies audit au moins un deuxième terminal du deuxième utilisateur et à chacun des premiers terminaux (T11, T12, T13) du premier utilisateur appartenant audit premier groupe (GR1).

12. Dispositif selon l'une des revendications 7 et 11, comportant un moyen de stockage de préférences du premier utilisateur (U1) et **caractérisé en ce que** le moyen de stockage comporte au moins des identifiants de premiers terminaux (T11, T12, T13) dudit premier utilisateur (U1) et au moins une règle de préférence dudit premier utilisateur (UP1) associés à une adresse dudit premier utilisateur (U1) adaptés à l'établissement de ladite session (SSX) entre au moins un deuxième terminal d'un deuxième utilisateur et un premier groupe (GR1) de premiers terminaux (T11, T12, T13) dudit premier utilisateur (U1), ledit premier groupe (GR1) ayant été créé à partir d'identifiants desdits premiers terminaux (T11, T12, T13) en fonction d'une première règle de préférence (UP1).

13. Serveur comportant un dispositif de contrôle selon la revendication 7, **caractérisé en ce qu'**il comporte au moins des premiers moyens de contrôle (CF1) d'une session (SSX) d'échange de données entre lesdits premiers terminaux (T11, T12, T13) du premier utilisateur (U1) avec au moins le deuxième terminal (T21, T22) du deuxième utilisateur (U2), lesdits premiers moyens de contrôle (CF1) créant, en outre, après réception de l'invitation d'établissement d'une session entre le premier utilisateur (U1) et le deuxième utilisateur, ledit premier groupe (GR1) de premiers terminaux (T11, T12, T13) du premier utilisateur (U1) adapté à l'établissement de ladite session (SSX) entre ce premier groupe (GR1) et le deuxième terminal.

14. Terminal, comportant des moyens de connexion aptes à émettre une invitation d'établissement d'une session (SSX) d'échange de données (inv(U1, U2), inv(U1→U2), inv(U2→U1)) entre un premier utilisateur (U1) et un deuxième utilisateur (U2),
**Caractérisé en ce qu'**il comporte un dispositif de participation selon la revendication 11, comprenant les moyens de modification de ladite invitation d'établissement de session,
les moyens de connexion étant en outre aptes à permettre l'établissement de ladite session (SSX) entre le premier groupe (GR1) de premiers terminaux (T11, T12, T13) du premier utilisateur (U1) et ledit au moins un deuxième terminal (T21, T22) du deuxième utilisateur (U2).

## Patentansprüche

1. Verfahren zur Kontrolle einer Sitzung (SSX) zum Datenaustausch zwischen ersten Endgeräten (T11, T12, T13) eines ersten Benutzers (U1) mit wenigstens einem zweiten Endgerät (T21, T22) eines zweiten Benutzers (U2), **dadurch gekennzeichnet, dass** das Kontrollverfahren, das durch eine Kontrollvorrichtung umgesetzt wird, nach Empfang einer Aufforderung zur Herstellung einer Sitzung (SSX) zwischen dem ersten Benutzer (inv(U1,U2), inv(U2→U1), inv(U1→U1)) und dem zweiten Benutzer, Folgendes aufweist:
- eine Erzeugung (CREA) einer ersten Gruppe (GR1) erster Endgeräte (T11, T12, T13) des ersten Benutzers, die für die Herstellung der Sitzung (SSX) zwischen dem wenigstens einen zweiten Endgerät des zweiten Benutzers und der ersten Gruppe geeignet ist (SSE (GR1, U2)),
- eine Herstellung einer Sitzung, die geeignet ist:
• wenn das wenigstens eine zweite Endgerät des zweiten Benutzers Daten sendet, darin, dass jedes der ersten Endgeräte des ersten Benutzers, das zur ersten Gruppe gehört, die Daten empfängt, die durch das wenigstens eine zweite Endgerät des zweiten Benutzers gesendet wurden; und
• wenn die Daten durch eins der ersten Endgeräte (T11, T12, T13) des ersten Benutzers (U1) während der Sitzung (SSX) gesendet werden, darin, dass die Daten, die von einem der ersten Endgeräte des ersten Benutzers gesendet werden, dem wenigstens einen zweiten Endgerät des zweiten Benutzers und jedem der ersten Endgeräte (T11, T12, T13) des ersten Benutzers, die zur ersten Gruppe (GR1) gehören, bereitgestellt werden.

2. Kontrollverfahren nach dem vorhergehenden Anspruch, **dadurch gekennzeichnet, dass** die erste Gruppe (GR1) Funktion einer ersten Liste (L1) erster Endgeräte (T11, T12, T13) ist, die von der Aufforderung zur Sitzungsherstellung (inv(U1, U2)) erhalten wird, die durch die erste Liste (L1) geändert wird.

3. Kontrollverfahren nach einem der vorhergehenden Ansprüche, **dadurch gekennzeichnet, dass** das Kontrollverfahren das Bereitstellen (BD(D, GR1)) der Daten, die für den ersten Benutzer (U1) während der Sitzung (SSX) empfangen werden, an die ersten Endgeräte (T11, T12, T13), die zur ersten Gruppe (GR1) gehören, aufweist.

4. Kontrollverfahren nach einem der vorhergehenden Ansprüche, **dadurch gekennzeichnet, dass** das Verfahren das Anzeigen (BD(D, GR1)) der Daten, die von dem ersten Benutzer (U1) während der Sitzung (SSX) gesendet werden, auf den ersten Endgeräten (T11, T12, T13), die zur ersten Gruppe (GR1) gehören, aufweist.

5. Kontrollverfahren nach einem der vorhergehenden Ansprüche, **dadurch gekennzeichnet, dass** das Kontrollverfahren ein Verwalten (MEM(HIST1, SSX)) eines Verlaufs der Austausche aufweist, das von den ersten Endgeräten (T11, T12, T13) unabhängig ist, die durch den ersten Benutzer (U1) zum Senden der Daten genutzt werden.

6. Programm, das Programmcode-Anweisungen umfasst, um die Schritte des Kontrollverfahrens nach einem der vorhergehenden Ansprüche auszuführen, wenn das Programm durch einen Prozessor ausgeführt wird.

7. Vorrichtung zur Kontrolle einer Sitzung (SSX) zum Datenaustausch zwischen ersten Endgeräten (T11, T12, T13) eines ersten Benutzers (U1) mit wenigstens einem zweiten Endgerät (T21, T22) eines zweiten Benutzers (U2), **dadurch gekennzeichnet, dass** die Kontrollvorrichtung Mittel zur Herstellung einer Sitzung (SSX) mit dem ersten Benutzer (U1) aufweist, die für die Herstellung der Sitzung (SSX) mit einer ersten Gruppe (GR1) erster Endgeräte (T11, T12, T13) des ersten Benutzers (U1) geeignet sind, wobei die erste Gruppe (GR1) nach Empfang, durch die Kontrollvorrichtung, einer Aufforderung zur Herstellung einer Sitzung zwischen dem ersten Benutzer (inv(U1, U2), inv(U2→U1), inv(U1→U1)) und dem zweiten Benutzer erzeugt wurde, wobei die Sitzung geeignet ist:
• wenn das wenigstens eine zweite Endgerät des zweiten Benutzers Daten sendet, darin, dass jedes der ersten Endgeräte des ersten Benutzers, das zur ersten Gruppe gehört, die Daten empfängt, die durch das wenigstens eine zweite Endgerät des zweiten Benutzers gesendet wurden; und
• wenn Daten durch eins der ersten Endgeräte (T11, T12, T13) des ersten Benutzers (U1) während der Sitzung (SSX) gesendet werden, dazu, dass die Daten, die von einem der ersten Endgeräte des ersten Benutzers gesendet werden, dem wenigstens einen zweiten Endgerät des zweiten Benutzers und jedem der ersten Endgeräte (T11, T12, T13) des ersten Benutzers, die zur ersten Gruppe (GR1) gehören, bereitgestellt werden.

8. Verfahren zur Teilnahme eines ersten Benutzers (U1) an einer Sitzung (SSX) zum Datenaustausch zwischen ersten Endgeräten (T11, T12, T13) eines ersten Benutzers (U1) mit wenigstens einem zweiten Endgerät (T21, T22) eines zweiten Benutzers (U2), **dadurch gekennzeichnet, dass** das Teilnahmeverfahren, das durch eine Teilnahmevorrichtung umgesetzt wird, eine Änderung (MODIF(inv) einer Aufforderung zur Herstellung einer Sitzung an den ersten Benutzer (U1) aufweist, die zur Herstellung der Sitzung (SSE (GR1, U2)) zwischen dem wenigstens einen zweiten Endgerät des zweiten Benutzers und einer ersten Gruppe (GR1) erster Endgeräte (T11, T12, T13) des ersten Benutzers (U1) geeignet ist, wobei die erste Gruppe (GR1) anhand der geänderten Aufforderung (inv(U1,U2,L1)) erzeugt wurde, wobei die Sitzung geeignet ist:
• wenn das wenigstens eine zweite Endgerät des zweiten Benutzers Daten sendet, darin, dass jedes der ersten Endgeräte des ersten Benutzers der ersten Gruppe die Daten empfängt, die durch das wenigstens eine zweite Endgerät des zweiten Benutzers gesendet wurden; und
• wenn Daten durch eins der ersten Endgeräte (T11, T12, T13) des ersten Benutzers (U1) während der Sitzung (SSX) gesendet werden, dazu, dass die Daten, die von einem der ersten Endgeräte gesendet werden, dem wenigstens einen zweiten Endgerät des zweiten Benutzers und jedem der ersten Endgeräte (T11, T12, T13), die zur ersten Gruppe (GR1) gehören, bereitgestellt werden.

9. Teilnahmeverfahren nach dem vorhergehenden Anspruch, **dadurch gekennzeichnet, dass** die Änderung (MODIF(inv)) eine Ersetzung einer Adresse des ersten Benutzers (U1) durch eine Liste erster Endgeräte (L1) in der Aufforderung zur Sitzungsherstellung an den ersten Benutzer (inv(U1,U2)) aufweist.

10. Programm, das Programmcode-Anweisungen umfasst, um die Schritte des Teilnahmeverfahrens nach einem der Ansprüche 9 oder 10 auszuführen, wenn das Programm durch einen Prozessor ausgeführt wird.

11. Vorrichtung zur Teilnahme eines ersten Benutzers (U1) an einer Sitzung (SSX) zum Datenaustausch zwischen ersten Endgeräten (T11, T12, T13) eines ersten Benutzers (U1) mit wenigstens einem zweiten Endgerät (T21, T22) eines zweiten Benutzers (U2), **dadurch gekennzeichnet, dass** die Teilnahmevorrichtung Mittel zum Ändern einer Aufforderung zur Herstellung einer Sitzung an den ersten Benutzer (inv(U1, U2), inv(U2,→U1), inv(U1→U1)) aufweist, die zur Herstellung der Sitzung (SSX) zwischen dem wenigstens einen zweiten Endgerät des zweiten Benutzers und einer ersten Gruppe (GR1) erster Endgeräte (T11, T12, T13) des ersten Benutzers (U1) geeignet ist, wobei die erste Gruppe (GR1) anhand der geänderten Aufforderung (inv(U1, U2, L1), inv(U2→U1, L1), inv(U1→U1, L1)) erzeugt wurde, wobei die Sitzung geeignet ist:
• wenn das wenigstens eine zweite Endgerät des zweiten Benutzers Daten sendet, darin, dass jedes der ersten Endgeräte des ersten Benutzers der ersten Gruppe die Daten empfängt, die durch das wenigstens eine zweite Endgerät des zweiten Benutzers gesendet wurden; und
• wenn Daten durch eins der ersten Endgeräte (T11, T12, T13) des ersten Benutzers (U1) während der Sitzung (SSX) gesendet werden, dazu, dass die Daten, die von einem der ersten Endgeräte des ersten Benutzers gesendet werden, dem wenigstens einen zweiten Endgerät des zweiten Benutzers und jedem der ersten Endgeräte (T11, T12, T13) des ersten Benutzers, die zur ersten Gruppe (GR1) gehören, bereitgestellt werden.

12. Vorrichtung nach einem der Ansprüche 7 und 11, aufweisend ein Mittel zur Speicherung von Präferenzen des ersten Benutzers (U1) und **dadurch gekennzeichnet, dass** das Speichermittel wenigstens Kennungen erster Endgeräte (T11, T12, T13) des ersten Benutzers (U1) und wenigstens eine Präferenzregel des ersten Benutzers (UP1) aufweist, die einer Adresse des ersten Benutzers (U1) zugeordnet sind, die zur Herstellung der Sitzung (SSX) zwischen wenigstens einem zweiten Endgerät eines zweiten Benutzers und einer ersten Gruppe (GR1) erster Endgeräte (T11, T12, T13) des ersten Benutzers (U1) geeignet sind, wobei die erste Gruppe (GR1) anhand von Kennungen der ersten Endgeräte (T11, T12, T13) in Abhängigkeit von einer ersten Präferenzregel (UP1) erzeugt wurde.

13. Server aufweisend eine Kontrollvorrichtung nach Anspruch 7, **dadurch gekennzeichnet, dass** er wenigstens erste Mittel zur Kontrolle (CF1) einer Sitzung (SSX) zum Datenaustausch zwischen den ersten Endgeräten (T11, T12, T13) des ersten Benutzers (U1) mit wenigstens dem zweiten Endgerät (T21, T22) des zweiten Benutzers (U2) aufweist, wobei die ersten Kontrollmittel (CF1) ferner nach Empfang der Aufforderung zur Herstellung einer Sitzung zwischen dem ersten Benutzer (U1) und dem zweiten Benutzer, die erste Gruppe (GR1) erster Endgeräte (T11, T12, T13) des ersten Benutzers (U1) erzeugen, die zur Herstellung der Sitzung (SSX) zwischen dieser ersten Gruppe (GR1) und dem zweiten Endgerät geeignet ist.

14. Endgerät aufweisend Verbindungsmittel, die geeignet sind, eine Aufforderung zur Herstellung einer Sitzung (SSX) zum Datenaustausch (inv(U1, U2), inv(U1→U2), inv(U2→U1)) zwischen einem ersten Benutzer (U1) und einem zweiten Benutzer (U2) zu senden,
**Dadurch gekennzeichnet, dass** es eine Teilnahmevorrichtung nach Anspruch 11 umfasst, umfassend die Mittel zum Ändern der Aufforderung zur Sitzungsherstellung,
wobei die Verbindungsmittel ferner geeignet sind, die Herstellung der Sitzung (SSX) zwischen der ersten Gruppe (GR1) erster Endgeräte (T11, T12, T13) des ersten Benutzers (U1) und dem wenigstens einen zweiten Endgerät (T21, T22) des zweiten Benutzers (U2) zu gestatten.

## Claims

1. Method for controlling a session (SSX) in which data are exchanged between first terminals (T11, T12, T13) of a first user (U1) with at least one second terminal (T21, T22) of a second user (U2), **characterized in that** said control method implemented by a control device includes, after receiving an invitation to set up a session (SSX) between said first user (inv(U1, U2), inv(U2,U1), inv(U1→U2)) and the second user,
- creating (CREA) a first group (GR1) of first terminals (T11, T12, T13) of the first user suitable for setting up said session (SSX) between the at least one second terminal of the second user and said first group (SSE(GR1, U2)),
- setting up a session suitable:
• when the at least one second terminal of the second user transmits data, for each of the first terminals of the first user belonging to the first group to receive the data transmitted by the at least one second terminal of the second user; and
• when data are transmitted by one of the first terminals (T11, T12, T13) of the first user (U1) during the session (SSX), for the data transmitted from one of the first terminals of the first user to be delivered to said at least one second terminal of the second user and to each of the first terminals (T11, T12, T13) of the first user belonging to said first group (GR1).

2. Control method according to the preceding claim, **characterized in that** said first group (GR1) is according to a first list (L1) of first terminals (T11, T12, T13) which is obtained from said invitation to set up a session (inv(U1, U2)) modified by said first list (L1).

3. Control method according to either of the preceding claims, **characterized in that** said control method includes delivering (BD(D, GR1)) the data received for the first user (U1) during the session (SSX) to the first terminals (T11, T12, T13) belonging to said first group (GR1).

4. Control method according to any one of the preceding claims, **characterized in that** said method includes displaying (BD(D, GR1)) the data transmitted by the first user (U1) during the session (SSX) on the first terminals (T11, T12, T13) belonging to said first group (GR1).

5. Control method according to any one of the preceding claims, **characterized in that** said control method includes independently managing (MEM(HIST1, SSX)) a history of the exchanges of the first terminals (T11, T12, T13) that are used by said first user (U1) for transmitting data.

6. Program comprising program code instructions for executing the steps of the control method according to any one of the preceding claims when said program is executed by a processor.

7. Device for controlling a session (SSX) in which data are exchanged between first terminals (T11, T12, T13) of a first user (U1) with at least one second terminal (T21, T22) of a second user (U2), **characterized in that** said control device includes means for setting up a session (SSX) with said first user (U1) that are suitable for setting up said session (SSX) with a first group (GR1) of first terminals (T11, T12, T13) of the first user (U1), said first group (GR1) having been created after receiving, by means of the control device, an invitation to set up a session between the first user (inv(U1, U2), inv(U2→U1), inv(U1→U2)) and the second user,
the session being suitable:
• when the at least one second terminal of the second user transmits data, for each of the first terminals of the first user belonging to the first group to receive the data transmitted by the at least one second terminal of the second user; and
• when data are transmitted by one of the first terminals (T11, T12, T13) of the first user (U1) during the session (SSX), for the data transmitted from one of the first terminals of the first user to be delivered to said at least one second terminal of the second user and to each of the first terminals (T11, T12, T13) of the first user belonging to said first group (GR1).

8. Method for the participation of a first user (U1) in a session (SSX) in which data are exchanged between first terminals (T11, T12, T13) of a first user (U1) with at least one second terminal (T21, T22) of a second user (U2), **characterized in that** said participation method implemented by a participation device includes modifying (MODIF(inv)) an invitation to set up a session to said first user (U1) suitable for setting up said session (SSE(GR1, U2)) between the at least one second terminal of the second user and a first group (GR1) of first terminals (T11, T12, T13) of said first user (U1), said first group (GR1) having been created on the basis of said modified invitation (inv(U1, U2, L1)),
the session being suitable:
• when the at least one second terminal of the second user transmits data, for each of the first terminals of the first user belonging of the first group to receive the data transmitted by the at least one second terminal of the second user; and
• when data are transmitted by one of the first terminals (T11, T12, T13) of the first user (U1) during the session (SSX), for the data transmitted from one of the first terminals to be delivered to said at least one second terminal of the second user and to each of the first terminals (T11, T12, T13) belonging to said first group (GR1).

9. Participation method according to the preceding claim, **characterized in that** said modification (MODIF(inv)) includes substituting an address of the first user (U1) with a list of first terminals (L1) in said invitation to set up a session to the first user (inv(U1, U2)).

10. Program comprising program code instructions for executing the steps of the participation method according to either of Claims 9 and 10 when said program is executed by a processor.

11. Device for the participation of a first user (U1) in a session (SSX) in which data are exchanged between first terminals (T11, T12, T13) of a first user (U1) with at least one second terminal (T21, T22) of a second user (U2), **characterized in that** said participation device includes means for modifying an invitation to set up said session to said first user (inv(U1, U2), inv(U2→U1), inv(U1→U1)) suitable for setting up said session (SSX) between the at least one second terminal of the second user and a first group (GR1) of first terminals (T11, T12, T13) of said first user (U1), said first group (GR1) having been created on the basis of said modified invitation (inv(U1, U2, L1), inv(U2→U1, L1), inv(U1→U1, L1)),
the session being suitable:
• when the at least one second terminal of the second user transmits data, for each of the first terminals of the first user of the first group to receive the data transmitted by the at least one second terminal of the second user; and
• when data are transmitted by one of the first terminals (T11, T12, T13) of the first user (U1) during the session (SSX), for the data transmitted from one of the first terminals of the first user to be delivered to said at least one second terminal of the second user and to each of the first terminals (T11, T12, T13) of the first user belonging to said first group (GR1).

12. Device according to either of Claims 7 and 11, including a means for storing preferences of the first user (U1) and **characterized in that** the storage means includes at least identifiers of first terminals (T11, T12, T13) of said first user (U1) and at least one preference rule of said first user (UP1) which are associated with an address of said first user (U1) and are suitable for setting up said session (SSX) between at least one second terminal of a second user and a first group (GR1) of first terminals (T11, T12, T13) of said first user (U1), said first group (GR1) having been created on the basis of identifiers of said first terminals (T11, T12, T13) according to a first preference rule (UP1) .

13. Server including a control device according to Claim 7, **characterized in that** includes at least first means (CF1) for controlling a session (SSX) in which data are exchanged between said first terminals (T11, T12, T13) of the first user (U1) with at least the second terminal (T21, T22) of the second user (U2), said first control means (CF1) further creating, after receiving the invitation to set up a session between the first user (U1) and the second user, said first group (GR1) of first terminals (T11, T12, T13) of the first user (U1) suitable for setting up said session (SSX) between this first group (GR1) and the second terminal.

14. Terminal including connection means that are capable of transmitting an invitation to set up a session (SSX) in which data are exchanged (inv(U1, U2), inv(U1→U2), inv(U2→U1)) between a first user (U1) and a second user (U2),
**characterized in that** it includes a participation device according to Claim 11 comprising means for modifying said invitation to set up a session,
the connection means further being capable of allowing said session (SSX) between the first group (GR1) of first terminals (T11, T12, T13) of the first user (U1) and said at least one second terminal (T21, T22) of the second user (U2) to be set up.
